(19) Europäisches Patentamt
European Patent Office
Office européen des brevets

(11) **EP 2 398 720 B1**

(12) **EUROPÄISCHE PATENTSCHRIFT**

(45) Veröffentlichungstag und Bekanntmachung des Hinweises auf die Patenterteilung:
**13.02.2013 Patentblatt 2013/07**

(21) Anmeldenummer: **10805188.9**

(22) Anmeldetag: **03.12.2010**

(51) Int Cl.:
**B65G 23/12** (2006.01) **B65G 35/00** (2006.01)
**B65G 47/96** (2006.01)

(86) Internationale Anmeldenummer:
**PCT/DE2010/001408**

(87) Internationale Veröffentlichungsnummer:
**WO 2011/085705 (21.07.2011 Gazette 2011/29)**

(54) **REIBRADANTRIEB**

FRICTION WHEEL DRIVE

ENTRAÎNEMENT PAR FRICTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2010 DE 102010004858**

(43) Veröffentlichungstag der Anmeldung:
**28.12.2011 Patentblatt 2011/52**

(73) Patentinhaber: **BEUMER GmbH & Co. KG 59269 Beckum (DE)**

(72) Erfinder: **HEITPLATZ, Heino 48317 Drensteinfurt (DE)**

(74) Vertreter: **Philipp, Matthias Boehmert & Boehmert Pettenkoferstrasse 20-22 80336 München (DE)**

(56) Entgegenhaltungen:
**EP-A1- 1 036 754    WO-A2-95/34492
JP-A- 11 227 916    NL-C- 30 023**

**Beschreibung**

Die Erfindung betrifft einen Reibradantrieb zur Übertragung von Antriebskräften in wechselnden Richtungen, etwa in fördertechnischen Anlagen. Derartige Antriebe sind z.ß. gattungsgemäß aus JP 11 227 916 A bekannt und haben u.a. den Nachteil, dass die Anpresskraft der Antriebsrollen relativ groß eingestellt werden muss, um die Übertragung der maximal zu erwartenden Antriebskräfte ohne übermäßigen Schlupf zu ermöglichen. Die Folge sind unnötiger Verschleiß und schlechter Wirkungsgrad.

Die Aufgabe der Erfindung besteht darin, einen an sich bekannten Reibradantrieb, bei dem eine Umfangsfläche einer Antriebsrolle mit einer Reibfläche zusammenwirkt, dahingehend zu verbessern, dass eine Übertragung von Antriebs- und Bremskräften variierender Größe in beiden Richtungen jeweils unter selbsttätiger, dem Reibkoeffizienten angemessener Vergrößerung der Anpresskraft der Antriebsrolle möglich ist.

Diese Aufgabe wird durch einen Reibradantrieb nach Anspruch 1 gelöst.

Ein derartiger Reibradantrieb ist dahingehend vorteilhaft, dass die Anpresskraft, mit der die Antriebsrolle gegen die Reibfläche angedrückt wird, nicht fest vorgegeben ist, etwa entsprechend einer maximal zu erwartenden Antriebskraft, sondern selbsttätig und unabhängig von der Antriebsrichtung an die zu übertragende Antriebskraft bzw. das zu übertragene Antriebsmoment angepasst wird, so dass einerseits ein zulässiger Schlupf nicht überschritten wird und andererseits unnötig große Anpresskräfte vermieden werden, mit denen ansonsten der Wirkungsgrad des Antriebs vermindert und unnötiger Verschleiß hervorgerufen würde.

Die erste und/oder die zweite Zwangsführung kann durch ein erstes und/oder zweites mechanisches Koppelelement gebildet sein, das die Lagereinheit mit einem Tragkörper koppelt, relativ zu dem die Lagereinheit quer zu der Drehachse verlagerbar geführt ist.

Insbesondere ist vorgesehen, dass eine Verlagerung der Lagereinheit parallel zur Reibfläche gleichzeitig und selbsttätig eine Verlagerung der Lagereinheit in Richtung der Reibfläche bewirkt. Bevorzugt ist die Anpresskraft proportional zur Antriebskraft. Bevorzugt ist vorgesehen, dass die Verlagerung in Richtung der Reibfläche proportional zur Verlagerung parallel zur Reibfläche ist.

In einer ersten Ausführungsform ist vorgesehen, dass zwei zweiarmige Schwenkhebel, die in einer antriebskraftfreien Ruheposition der Lagereinheit beiderseits, insbesondere symmetrisch zu, einer die Drehachse enthaltenden und senkrecht zur Reibfläche verlaufenden Ebene angeordnet sind, mit ersten Hebelarmen auf einer parallel zur Reibfläche angeordneten Andruckfläche der Lagereinheit und jeweils mit einem zweiten Hebelarm auf einer jeweils senkrecht (oder im Wesentlichen senkrecht, wobei die Differenz zur senkrechten Richtung etwa dem Reibwinkel der Reibpaarung Andruckrolle/Reibfläche entsprechen kann) zur Reibfläche angeordneten Übertragungsfläche der Lagereinheit abstützbar sind. Die Schwenkhebel können an dem Tragkörper angelenkt sein.

Hierbei kann vorgesehen sein, dass die Lagereinheit um eine auf einem senkrecht zur Reibfläche verlagerbaren Schlitten und parallel zur Drehachse der Antriebsrolle angeordnete Schwenkachse schwenkbar gehalten ist.

Hierbei kann der Schlitten entweder entlang einer Linearführung oder um eine parallel zur Drehachse angeordnete Schwenkachse senkrecht zur Reibfläche verlagerbar geführt sein.

In einer weiteren Ausführungsform kann vorgesehen sein, dass ein Andruckelement gegen eine der Reibfläche gegenüberliegende Gegenfläche, die eine weitere, zur Reibfläche parallele Außenfläche eines Reibantriebskörpers ist, anpressbar ist, wobei zwei zweiarmige Schwenkhebel, die in einer antriebskraftfreien Ruheposition der Lagereinheit beiderseits, insbesondere symmetrisch zu, einer die Drehachse der Antriebsrolle enthaltenden und senkrecht zu der Reibfläche verlaufenden Ebene angeordnet sind, mit ersten Hebelarmen jeweils auf einer senkrecht zur Reibfläche angeordneten Übertragungsfläche der Lagereinheit und mit zweiten Hebelarmen auf einer parallel zu der Reibfläche angeordneten Andruckfläche eines das Andruckelement tragenden und senkrecht zur Gegenfläche verlagerbar geführten Andruckkörpers abstützbar sind. Die Schwenkhebel können an dem Tragkörper angelenkt sein.

Hierbei kann vorgesehen sein, dass die Lagereinheit entlang einer parallel zur Reibfläche ausgerichteten Linearführung oder um eine zu der Drehachse der Antriebsrolle parallele, insbesondere auf einem Tragkörper angeordnete Schwenkachse senkrecht zur Reibfläche verlagerbar geführt ist.

Weiter kann vorgesehen sein, dass das Andruckelement entlang einer Linearführung, die senkrecht zur Reibfläche angeordnet ist, oder um eine zur Drehachse parallele, insbesondere auf einem Tragkörper angeordnete Schwenkachse senkrecht zur Reibfläche verlagerbar geführt ist.

Das Andruckelement kann relativ zu der Lagereinheit federvorgespannt sein.

In einer weiteren Ausführungsform kann vorgesehen sein, dass die Lagereinheit an einer insbesondere V-förmig ausgebildeten Steuerfläche, die in einer antriebskraftfreien Ruheposition der Lagereinheit beiderseits, insbesondere symmetrisch zu, einer die Drehachse der Antriebsrolle enthaltenden und senkrecht zu der Reibfläche verlaufenden Ebene angeordnet ist, zwangsgeführt ist, wobei eine Verlagerung der Lagereinheit parallel zur Reibfläche gleichzeitig eine Verlagerung in Richtung der Reibfläche bewirkt.

Hierbei kann vorgesehen sein, dass die Lagereinheit entlang einer ersten Linearführung, die parallel oder senkrecht zur Reibfläche ausgerichtet ist, auf einem Schlitten verlagerbar geführt ist, der seinerseits entlang einer zweiten Linearführung, die senkrecht zu der ersten Linearführung ausgerichtet ist, verlagerbar geführt ist, insbesondere auf dem Tragkörper. Jede der Linearführungen kann analog zu den vorstehend beschriebenen Ausführungsformen durch eine Schwenklagerung mit einer zur Drehachse der Antriebsrolle parallelen, an dem Schlitten bzw. an dem Tragkörper gehaltenen Schwenkachse ersetzt sein.

In einer Ausführungsform ist vorgesehen, dass die Lagereinheit auf einem senkrecht zur Reibfläche verlagerbaren Schlitten um eine auf dem Schlitten und parallel zur Drehachse der Antriebsrolle angeordnete Schwenkachse verschwenkbar gehalten ist, wobei der Schlitten entlang einer insbesondere bogenförmig ausgebildeten Steuerfläche, die in einer antriebskraftfreien Ruheposition der Lagereinheit beiderseits, insbesondere symmetrisch zu, einer die Drehachse der Antriebsrolle enthaltenden und senkrecht zu der Reibfläche verlaufenden Ebene angeordnet ist, zwangsgeführt ist, wobei eine Verlagerung der Lagereinheit parallel zur Reibfläche gleichzeitig eine Verlagerung in Richtung der Reibfläche bewirkt.

Hierbei kann vorgesehen sein, dass der Schlitten entlang einer senkrecht zur Reibfläche ausgerichteten Linearführung oder um eine zu der Drehachse der Antriebsrolle parallele, insbesondere auf einem Tragkörper angeordnete Schwenkachse senkrecht zur Reibfläche verlagerbar geführt ist.

Bei den genannten Ausführungsformen mit zwei Winkelhebeln kann vorgesehen sein, dass die Übertragungsflächen V-förmig unter einem Winkel zu der genannten Ebene angeordnet sind, der bzw. dessen arc tan-Wert einem Längenverhältnis der ersten und zweiten Hebelarme entspricht. Der Winkel kann so gewählt sein, dass ein Abstand zwischen Übertragungsrollen der ersten Hebearme und der Andruckfläche und jeweilige Abstände zwischen Übertragungsrollen der zweiten Hebelarme und den Übertragungsflächen bei veränderlichem Abstand der Schwenkachse der Lagereinheit von der Schwenkachse der Schwenkhebel im wesentlichen konstant bleiben.

Bei den Ausführungsformen ohne verlagerbaren Andruckkörper kann vorgesehen sein, dass ein an dem Tragkörper gehaltenes Andruckelement, das gegen eine der Reibfläche gegenüberliegende Gegenfläche, die eine weitere, zur Reibfläche parallele Außenfläche eines Reibantriebskörpers ist, anpressbar ist, relativ zu der Lagereinheit federvorgespannt ist.

Weiterhin kann vorgesehen sein, dass die Lagereinheit und/oder der Andruckkörper um eine Schwenkachse senkrecht zu der Reibfläche verlagerbar geführt ist, wobei vorgesehen sein kann, dass die Schwenkachse mit einer Schwenkachse übereinstimmt, an der ein Tragkörper an einem Gestell schwenkbeweglich angelenkt ist.

Weitere Vorteile und Merkmale der Erfindung ergeben sich aus der nachfolgenden Beschreibung mehrerer Ausführungsbeispiele, wobei auf eine Zeichnung Bezug genommen ist, in der

Figur 1 eine Draufsicht auf eine erste Ausführungsform der Erfindung zeigt,

Figur 2 eine Vorderansicht der ersten Ausführungsform zeigt,

Figur 3 eine Seitenansicht der ersten Ausführungsform zeigt,

Figur 4 eine perspektivische Ansicht der ersten Ausführungsform aus einer Richtung zeigt,

Figur 5 eine perspektivische Ansicht der ersten Ausführungsform aus einer anderen Richtung zeigt,

Figur 6 eine Draufsicht auf eine zweite Ausführungsform der Erfindung zeigt,

Figur 7 eine perspektivische Ansicht der zweiten Ausführungsform aus einer Richtung zeigt,

Figur 8 eine perspektivische Ansicht der zweiten Ausführungsform aus einer anderen Richtung zeigt,

Figur 9 eine Draufsicht auf eine dritte Ausführungsform der Erfindung zeigt,

Figur 10 eine perspektivische Ansicht der dritten Ausführungsform zeigt,

Figur 11 eine Draufsicht auf eine vierte Ausführungsform der Erfindung zeigt,

Figur 12 eine perspektivische Ansicht der vierten Ausführungsform zeigt,

Figur 13 eine Draufsicht auf eine fünfte Ausführungsform der Erfindung zeigt,

Figur 14 eine perspektivische Ansicht der fünften Ausführungsform zeigt,

Figur 15 eine Draufsicht auf eine sechste Ausführungsform der Erfindung zeigt,

Figur 16 eine perspektivische Ansicht der sechsten Ausführungsform aus einer Richtung zeigt,

Figur 17 eine perspektivische Ansicht der sechsten Ausführungsform aus einer anderen Richtung zeigt,

Figur 18 eine Draufsicht auf eine siebte Ausführungsform der Erfindung zeigt,

Figur 19 eine perspektivische Ansicht der siebten Ausführungsform zeigt,

Figur 20 eine Draufsicht auf eine achte Ausführungsform der Erfindung zeigt,

Figur 21 eine Draufsicht auf die achte Ausführungsform aus entgegengesetzter Richtung zeigt,

Figur 22 eine perspektivische Ansicht der achten Ausführungsform zeigt, und

Figur 23 den Zusammenhang zwischen Kraftschluss und Schlupf erläutert.

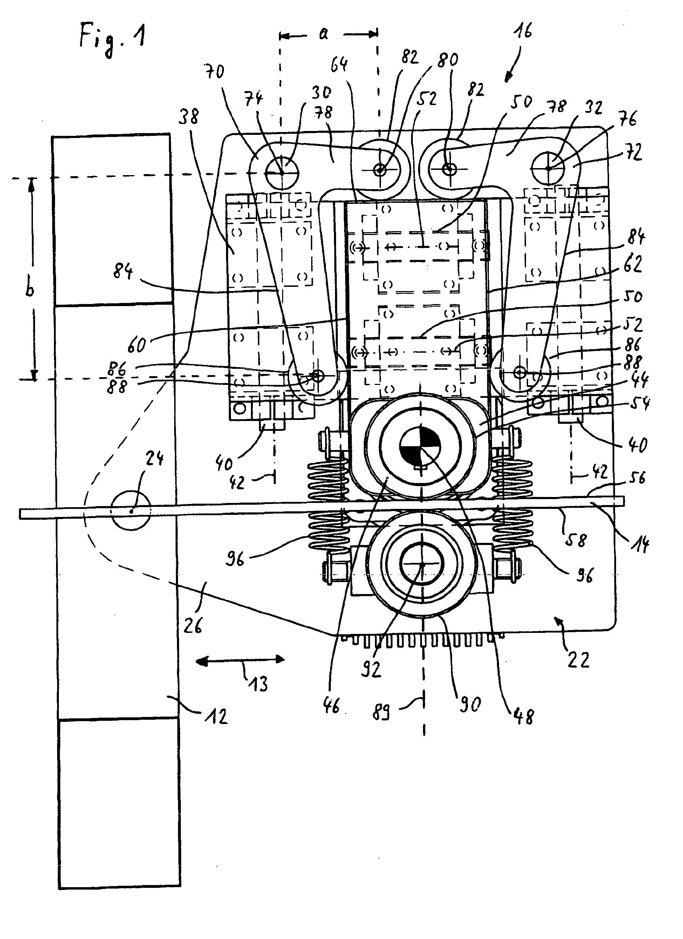

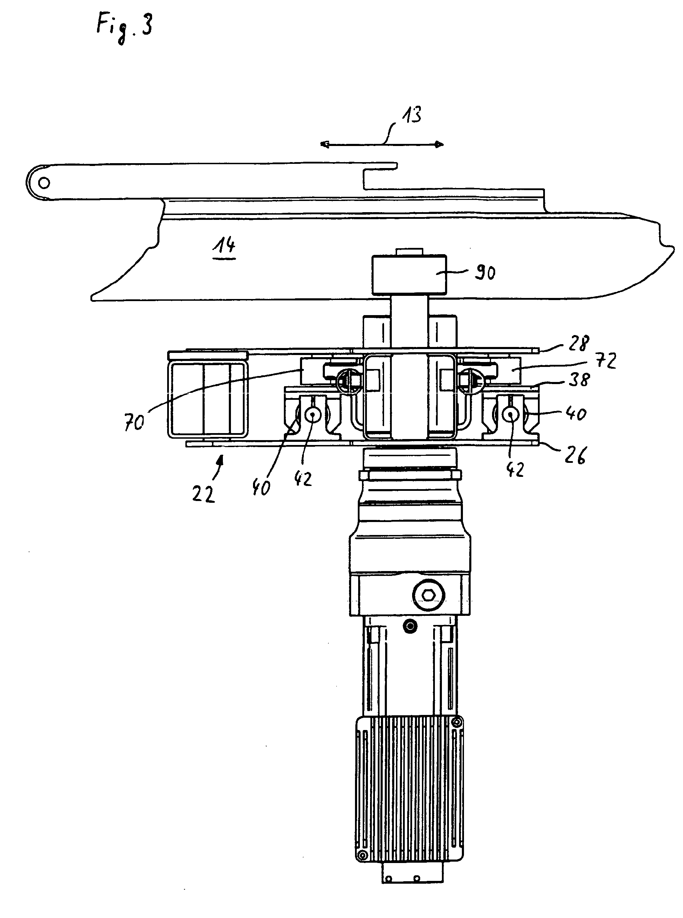

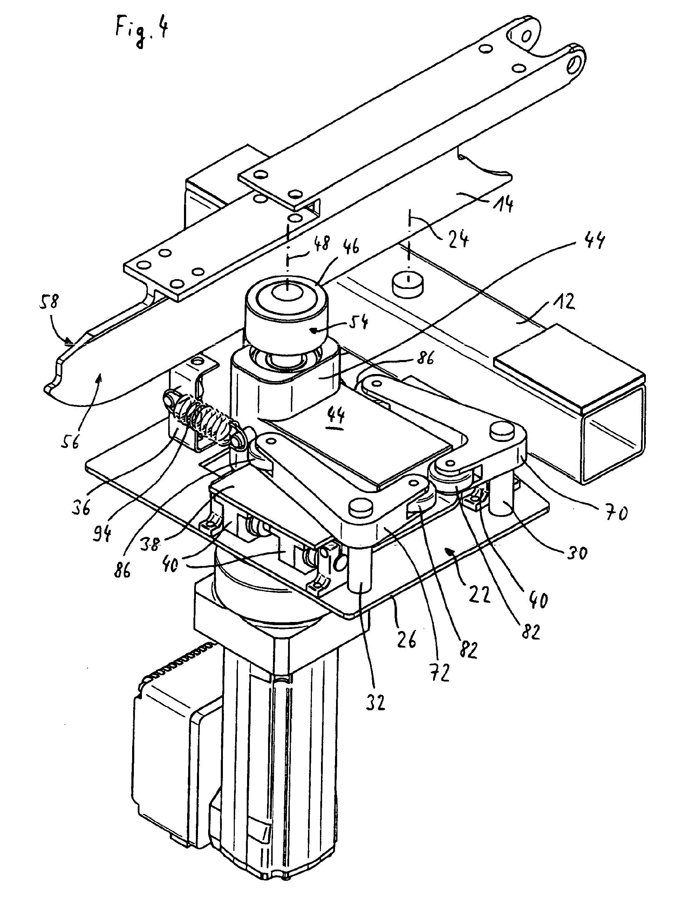

Figur 1 bis 5 zeigen in unterschiedlichen Ansichten eine erste Ausführungsform eines erfindungsgemäßen Reibradantriebs, der in dem dargestellten Anwendungsfall zum Antrieb einzelner Wagen einer Fördereinrichtung dient.

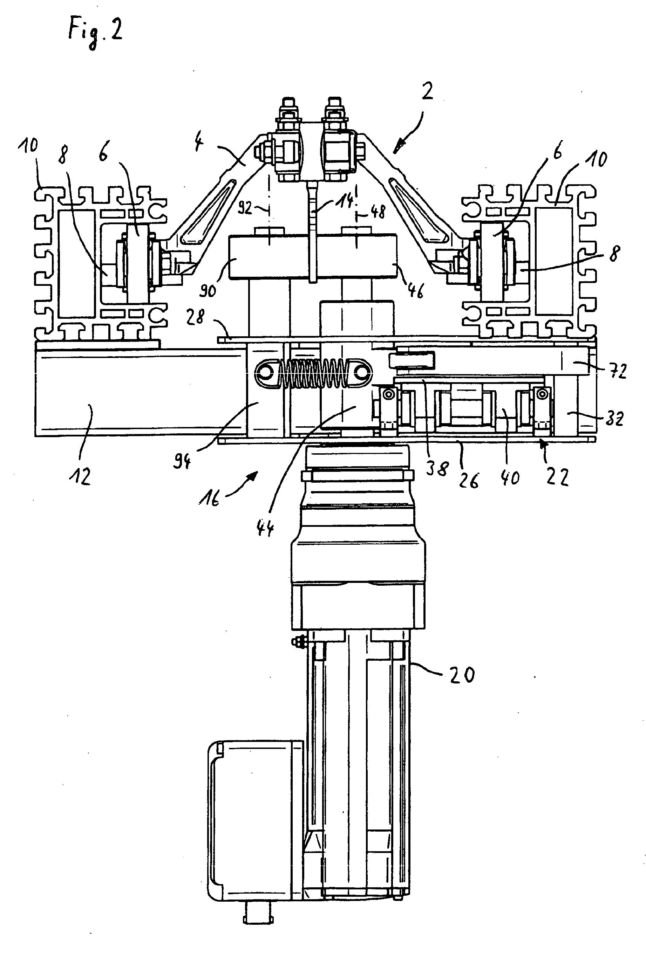

Figur 2 zeigt in einer schematischen Vorderansicht einen einzelnen Wagen 2 einer Fördereinrichtung, der ein Chassis 4 aufweist, an dem um horizontale Achsen drehbare Tragrollen 6 sowie um vertikale Achsen drehbare Führungsrollen 8 gelagert sind. Trag- und Führrungsrollen 6, 8 laufen im Wesentlichen spielfrei in einem Paar Führungsschienen 10, die parallel und mit Abstand auf einem tragenden Gestell 12 befestigt sind, so dass die Wagen in einer Längsrichtung oder Förderrichtung 13 verfahrbar sind.

An jedem Wagen 2 ist ein vertikal nach unten weisendes und in Längsrichtung 13 orientiertes, plattenförmiges Antriebsschwert 14 befestigt, mit dessen Hilfe eine in Längsrichtung gerichtete Antriebskraft mittels eines Reibradantriebs 16 auf den Wagen 2 übertragen werden kann.

Da in der Regel eine Kette von Wagen 2 mittels Gelenken miteinander verbunden ist und überdies jeder Wagen 2 eine gewisse Trägheit besitzt, genügt es, wenn an dem Gestell 12 mindestens einer oder über die Länge der Fördereinrichtung verteilt einige Reibradantriebe 16 mit gegenseitigen Abständen angeordnet sind.

Figur 1 zeigt eine Draufsicht auf einen derartigen Reibradantrieb, wobei ein Teil des Gestells 12 sowie das Antriebsschwert 14 dargestellt sind, welches sich in Längsrichtung 13 erstreckt.

An dem Gestell 12 ist ein Tragkörper 22 um eine hier vertikale Schwenkachse 24, die einem Fluchtungsausgleich zwischen Antriebsschwert 14 und Reibradantrieb dient, schwenkbar gehalten. Der Tragkörper 22 weist eine ebene Grundplatte 26 auf, an der mit Abstand und parallel dazu eine weitere ebene Platte 28 fixiert ist. Zwischen den Platten 26, 28 erstrecken sich zylindrische Lagerzapfen 30, 32 und Befestigungswinkel 34, 36.

Auf der unteren Platte 26 ist ein Schlitten 38 auf zwei mit Abstand und parallel zueinander angeordneten Linearführungen 40 entlang Verschiebeachsen 42 relativ zu der Platte 26 geführt. Die beiden Linearführungen 40 bilden hierbei eine erste Linearführung.

Eine Lagereinheit 44, an der eine drehantreibbare Antriebsrolle 46 um eine Drehachse 48 drehbar gelagert ist, ist auf dem Schlitten 38 entlang zweier Linearführungen 50, die eine zweite Linearführung bilden, entlang Verschiebeachsen 52 längsverschieblich geführt, wobei die zweite Linearführung 50 senkrecht zu der ersten Linearführung 40 ausgerichtet ist.

Unterhalb des Tragkörpers 22 ist ein Antriebsmotor 20 angeordnet, der mit der Antriebsrolle 46 in Antriebsverbindung steht und mit der Lagereinheit fest verbunden oder separat angeordnet und über eine starre oder flexible Antriebsverbindung wie Kette, Riemen oder Kardanirleb mit der Antriebrolle verbunden sein kann.

Eine Umfangsfläche 54 der Antriebsrolle 46 ist mit einer eine Außenfläche des Antriebschwerts 14 bildenden Reibfläche 56 in Eingriff bringbar, die im Betrieb im Wesentlichen parallel zu der zweiten Linearführung 50 ist.

Die Lagereinheit 44 weist zwei zueinander und zu der ersten Linearführung 40 parallel verlaufende Übertragungsflächen 60, 62 sowie eine dazu senkrecht und parallel zu der zweiten Längsführung 50 verlaufende Andruckfläche 64 auf.

Auf dem Tragkörper 22 sind an den tragkörperfesten Lagerzapfen 30, 32 zwei zweiarmige Schwenkhebel 70, 72 um senkrecht zu den Linearführungen 40, 50 und parallel zur Drehachse 48 der Antriebsrolle 46 angeordnete Schwenkachsen 74, 76 schwenkbar gelagert. Am Ende eines jeden ersten Hebelarms 78 sitzt eine um eine Drehachse 80 drehbare Übertragungsrolle 82, wobei ein Abstand zwischen Drehachse 80 und Schwenkachse 74 bzw. 76 des jeweiligen Schwenkhebels a beträgt. Die Übertragungsrollen 82 können auf der Andruckfläche 64 abrollen.

Am Ende eines jeden zweiten Hebelarms 84 der Schwenkhebel 70, 72 sitzt ebenfalls eine Übertragungsrolle 86, die um eine Drehachse 88 in einem Abstand b von der jeweiligen Schwenkachse 74, 76 des betreffenden Schwenkhebels 70, 72 drehbar gehalten ist und auf der dem betreffenden Schwenkhebel zugewandten Übertragungsfläche 60 oder 62 abrollen kann.

Die Hebelanordnung 70, 72 ist bevorzugt symmetrisch zu einer die Drehachse 48 der Antriebsrolle 46 enthaltenden und senkrecht zur Reibfläche 56 verlaufenden Ebene 89, damit die Anpresswirkung des Reibradantriebs in beiden Antriebsrichtungen gleich ist.

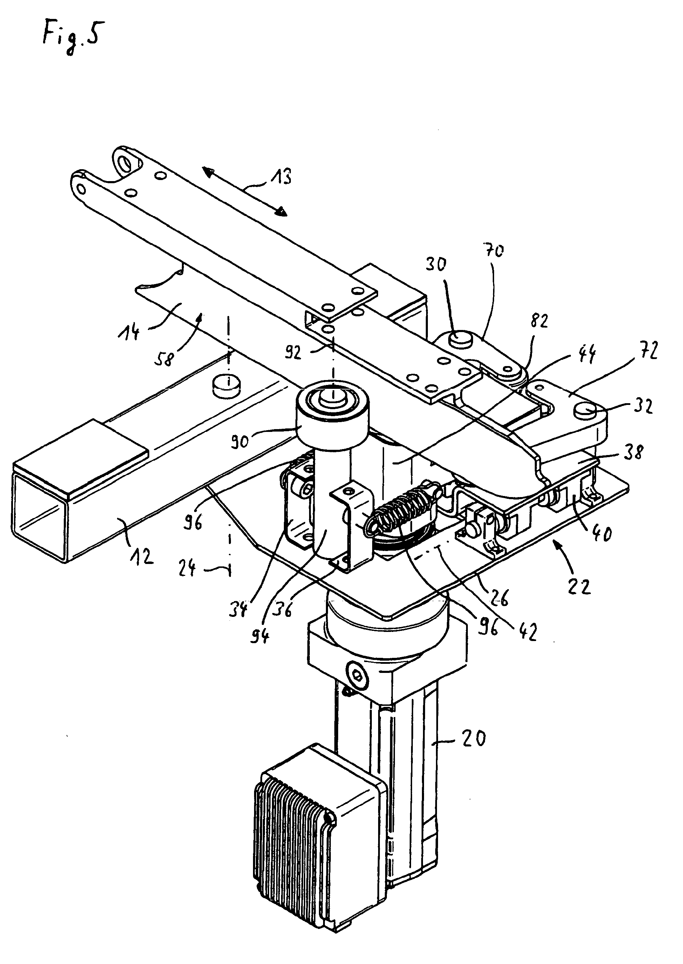

Wie insbesondere Figur 5 zeigt, ist eine ein Andruckelement bildende Andruckrolle 90 vorgesehen, die um eine parallel zur der Drehachse 48 der Antriebsrolle 46 angeordnete Drehachse 92 frei mitlaufend auf einem Lagerzapfen 94 gehalten ist. Der Lagerzapfen 94 ist fest mit dem Tragkörper bzw. mit den Platten 26, 28 verbunden, so dass die Drehachse 92 relativ zu dem Tragkörper 22 ortsfest ist. Vorgespannte Zugfedern 96 sind zwischen Befestigungswinkeln 34, 36, die ortsfest an dem Tragkörper 22 gehalten sind, und der Lagereinheit 44 angeordnet und legen dadurch eine Vorspannkraft der Antriebsrolle 46 in Richtung auf die Andruckrolle 90 fest.

Im Betrieb gelangt das Antriebsschwert 14 bei einer Längsbewegung eines Wagens 2 in den Bereich zwischen Antriebsrolle 46 und Andruckrolle 90 eines Reibradantriebs 16, wobei die Rollen durch eine geeignete Wahl der Spannfedern 96 mit einer vorgegebenen Anpresskraft gegeneinander vorgespannt sind, so dass Reibungskräfte in den Linearführungen usw. überwunden werden. Es besteht daher unabhängig von einer Antriebskraft bereits eine zur Reibfläche gerichtete Normalkraft der Antriebsrolle 46.

Bei einem Antrieb der Antriebsrolle 46 mit einem Antriebsmoment in einer ausgewählten Drehrichtung (vorwärts oder rückwärts) stellt sich eine in umgekehrter Richtung zur Antriebskraft auf die Antriebsrolle wirkende Reaktionskraft parallel zur Reibfläche 56 ein, d.h. parallel zu den Verschiebeachsen 52 der zweiten Linearführung 50, entlang der die Lagereinheit 44 relativ zu dem Schlitten 38 verschiebbar ist. In Abhängigkeit von verbleibendem Spiel, Elastizität der Antriebsrolle 46, Elastizität der Andruckrolle 90 usw. wird die Lagereinheit 44 unter der Wirkung der genannten Reaktionskraft parallel zur Reibfläche verlagert. Dabei wird einer der Schwenkhebel 70, 72, der sich in Richtung der Verlagerungsbewegung befindet, aufgrund des Kontakts zwischen einem zweiten Hebelarm 84 bzw. dessen Übertragungsrolle 86 und der Übertragungsfläche 60 oder 62 um die Schwenkachse 74 oder 76 verschwenkt, so dass die am Ende des ersten Hebelarms 78 befindliche Übertragungsrolle 82 auf die Andruckfläche 64 zu drücken beginnt und die Lagereinheit 44 um einen Betrag in Richtung senkrecht zu der Reibfläche 56 bewegt, der sich aus dem Verhältnis der Hebelarmlängen a/b zwischen erstem und zweitem Hebelarm ergibt, oder dem effektiven Hebelarmlängenverhältnis, wenn die Hebelarme einen anderen Winkel als 90° einschließen.

Die Antriebsrolle 46 wird somit in Abhängigkeit von der jeweils wirkenden Antriebskraft mit einer unterschiedlich starken Anpresskraft gegen die Reibfläche gedrückt, etwa proportional zur Antriebskraft, wodurch eine erhebliche Verschleißminderung und eine Verbesserung des Wirkungsgrads im Vergleich zu einer fest eingestellten Anpresskraft erzielt werden kann. Insbesondere wirkt die selbsttätige Verstärkung der Anpresskraft in beiden Richtungen, d.h. unabhängig von der Antriebsrichtung.

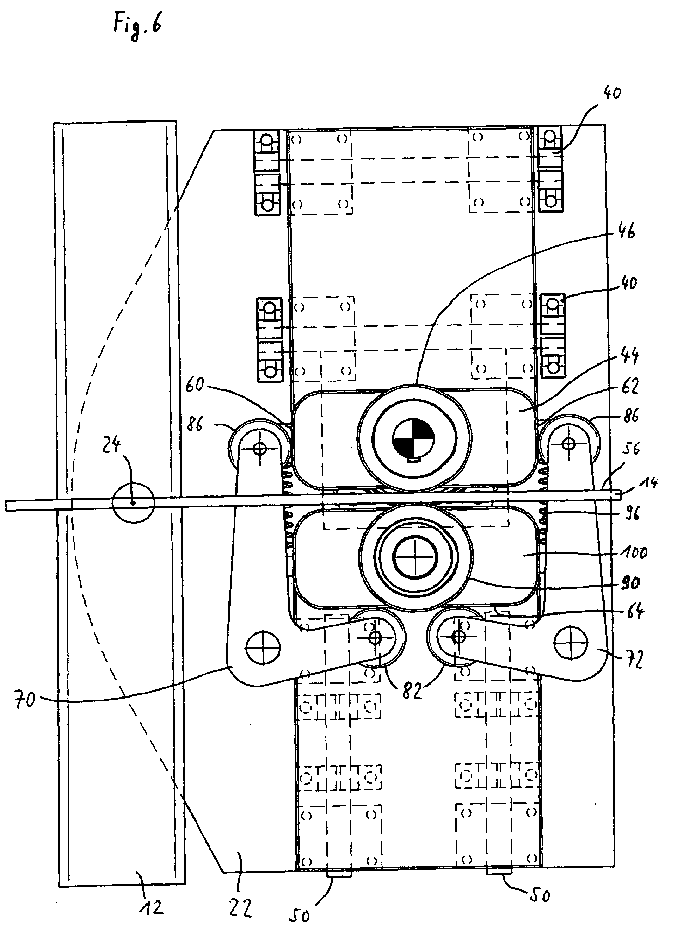

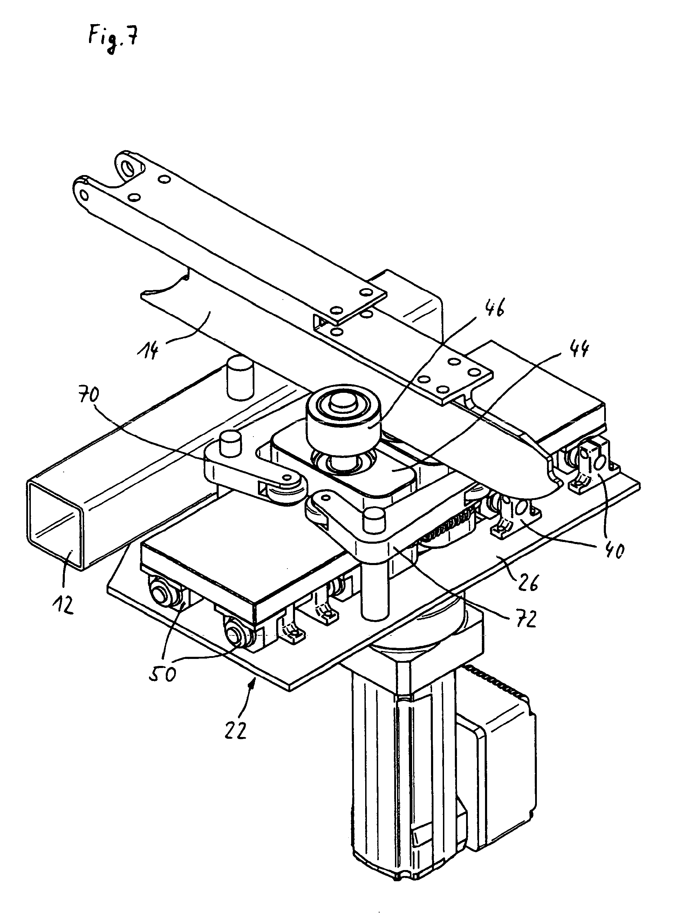

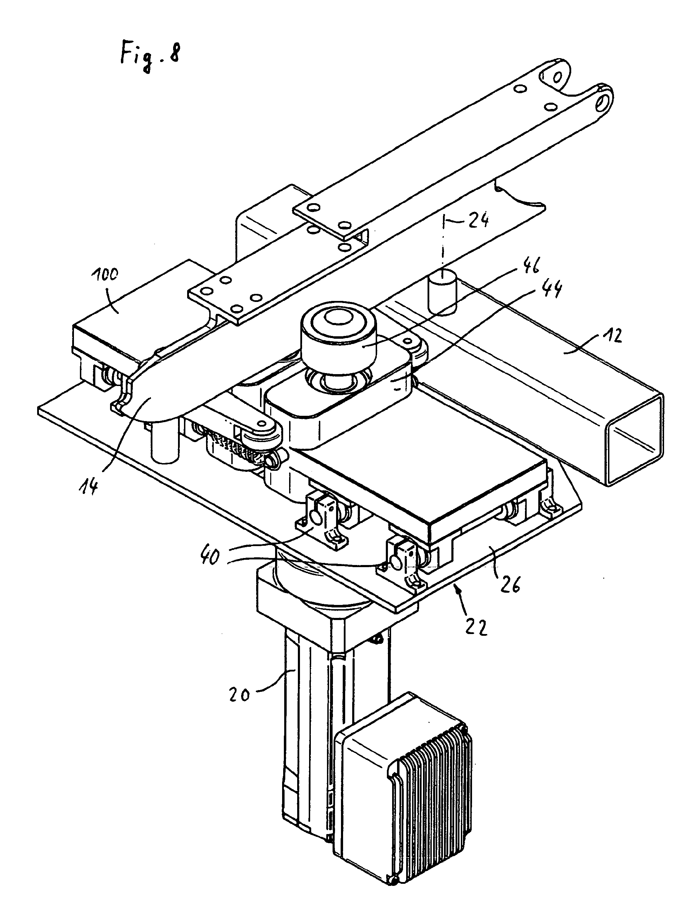

Figur 6 bis 8 erläutern eine zweite Ausführungsform der Erfindung, bei der die Lagereinheit 44 auf einer ersten, fest mit dem Tragkörper 22 verbundenen Linearführung 40 parallel zur Reibfläche 56 verschieblich gelagert ist, während ein die Andruckrolle 90 tragender Andruckkörper 100 auf einer mit dem Tragkörper 22 fest verbundenen zweiten Linearführung 50 senkrecht zur Reibfläche 56 und senkrecht zur ersten Linearführung 40 verlagerbar geführt ist. Zwischen Lagereinheit 44 und Andruckkörper 100 sind Spannfedern 96 vorgesehen, die die beiden Elemente gegeneinander vorspannen.

Die senkrecht zur Reibfläche verlaufenden Übertragungsflächen 60, 62 sind hier wie bei der ersten Ausführungsform seitlich an der Lagereinheit 44 angeordnet, während die senkrecht dazu verlaufende Andruckfläche 64 an dem Andruckkörper 100 ausgebildet ist. Eine durch die beim Antrieb der Antriebsrolle 46 hervorgerufene Reaktionskraft bewirkte Verlagerung der Lagereinheit 44 parallel zur Reibfläche bewirkt somit über die Schwenkhebel 70, 72 eine Relativbewegung des Andruckkörpers 100 und damit der Andruckrolle 90 senkrecht zur Reibfläche in Richtung der Lagereinheit 44, ebenfalls unabhängig von der Antriebsrichtung der Antriebsrolle 46.

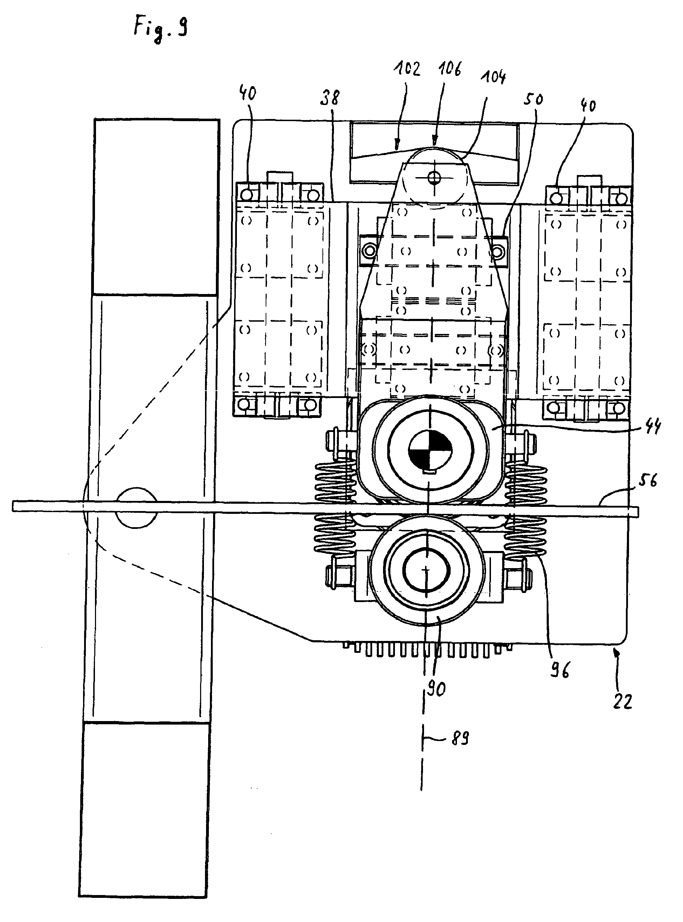

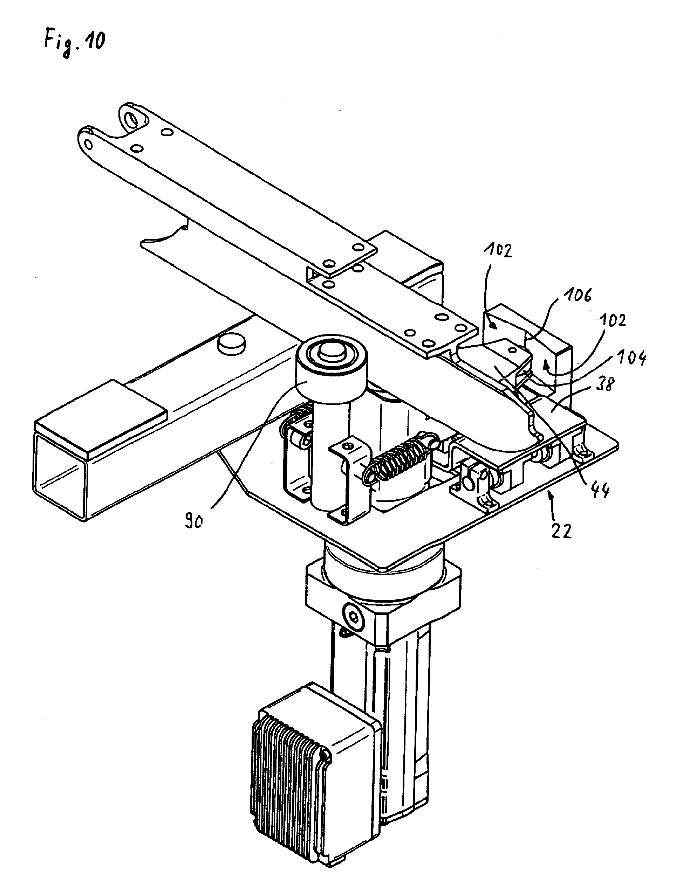

Figur 9 und 10 erläutern eine dritte Ausführungsform der Erfindung, bei der die Anordnung von Andruckrolle 90, Lagereinheit 44, Schlitten 38 und erster und zweiter Linearführung 40, 50 der ersten Ausführungsform entspricht. Lediglich die Schwenkhebel 70, 72 sind durch eine V-förmige Steuerfläche 102 und eine damit zusammenwirkende, auf der Lagereinheit 44 drehbar gelagerte Steuerrolle 104 ersetzt. Die Steuerfläche 102 nähert sich ausgehend von einem am weitesten von der Reibfläche 56 entfernten Scheitelpunkt 106 in beiden Richtungen unter einem flachen Winkel der Reibfläche an, so dass die Lagereinheit 44 bei einer Verlagerung parallel zur Reibfläche eine entsprechende, geringere Annäherung an die Reibfläche erfährt. Die beiden Bereiche der Steuerfläche 102 beiderseits des Scheitelpunkts 106 sind bevorzugt symmetrisch zur Ebene 89 und verlaufen unter gleichen Winkeln-dazu bzw. zur Reibfläche, was der spiegelbildlich gleichen Ausbildung der Schwenkhebel 70, 72 der zuvor beschriebenen Ausführungsbeispiele entspricht und sicherstellt, dass die Andruckwirkung in beiden Richtungen gleich ist. Durch den Winkel, unter dem die Steuerfläche bzw. ihre beiden Abschnitte beiderseits der Ebene 89 oder des Scheitelpunkts 106 in Bezug auf die Reibfläche verläuft, ist das Verhältnis von Verlagerung parallel zur Reibfläche und Verlagerung senkrecht zur Reibfläche festgelegt, und entspricht damit auch dem Verhältnis zwischen Anpresskraft und Reaktionskraft.

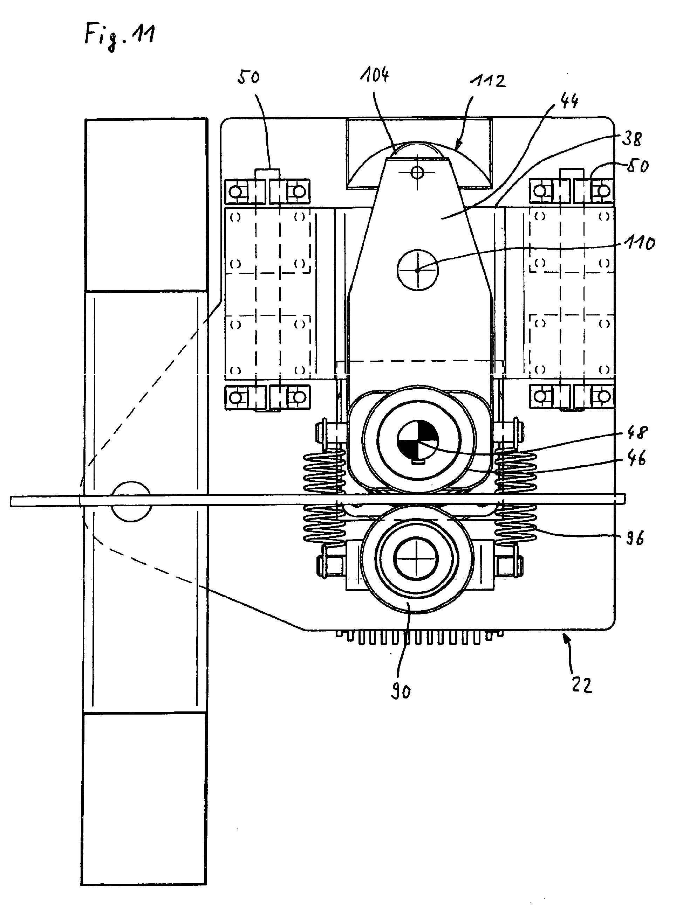

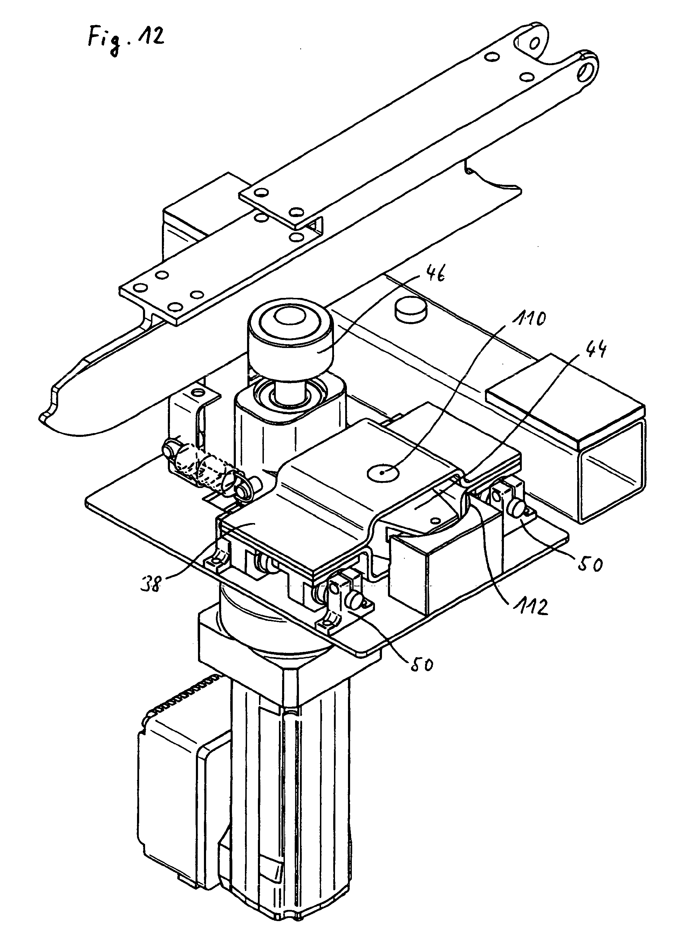

Figur 11 und 12 zeigen eine vierte Ausführungsform der Erfindung, die im Hinblick auf die Steuerfläche 102 ähnlich wie die dritte Ausführungsform aufgebaut ist, wobei allerdings die Lagereinheit 44 nicht entlang einer Linearführung parallel zur Reibfläche, sondern um eine zur Drehachse 48 der Antriebsrolle 46 parallele Schwenkachse 110 auf dem Schlitten 38 gelagert ist, der wiederum entlang einer senkrecht zur Reibfläche angeordneten Linearführung 50 verlagerbar geführt ist. Spannfedern 96 spannen die Lagereinheit 44 auf dem Schlitten 38 in Richtung auf eine bezüglich des Tragkörpers 22 ortsfest angeordnete Andruckrolle 90 vor.

An einem der Antriebsrolle 46 gegenüberliegenden Ende der Lagereinheit 44 ist ähnlich wie bei der dritten Ausführungsform eine um eine zur Drehachse 48 der Antriebsrolle 46 parallele Drehachse eine Steuerrolle 104 drehbar gelagert, die auf einer auf dem Tragkörper 22 ortsfest angeordneten Steuerfläche 112 abrollen kann. Die Steuerfläche 112 ist, anders als die Steuerfläche 102 der dritten Ausführungsform, bogenförmig ausgebildet, wobei ihr lokaler Abstand von der Schwenkachse 110 der Lagereinheit 44 mit zunehmendem Schwenkwinkel der Lagereinheit, bezogen auf die dargestellte antriebkraftfreie Ausgangsposition, kontinuierlich abnimmt. Die Steuerfläche 112 weist dabei eine solche Form auf, dass die Drehachse 48 der Antriebsrolle 46 bei zunehmender Auslenkung oder Verschwenkung der Lagereinheit 44 um die Schwenkachse 110 zunehmend in Richtung der Reibfläche verlagert wird.

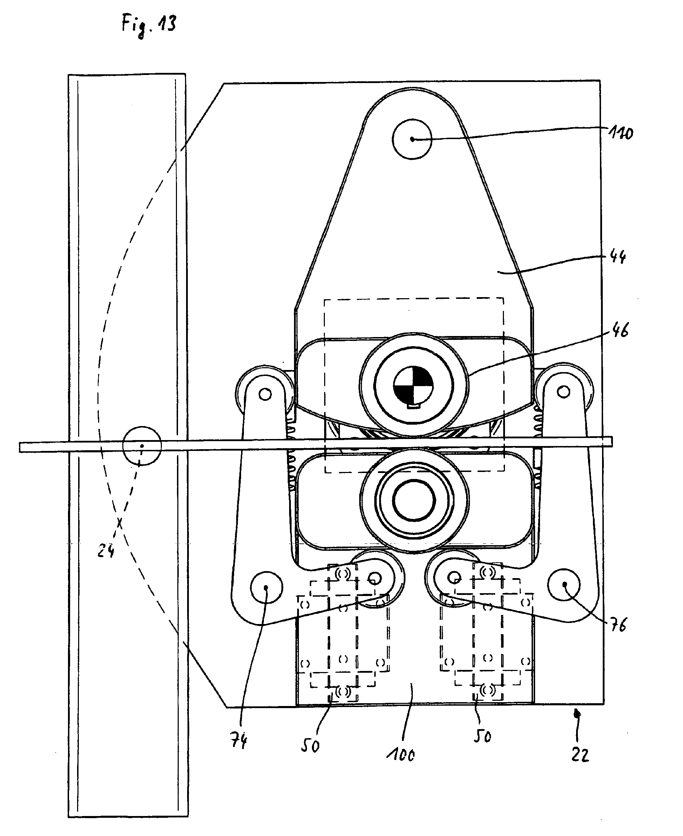

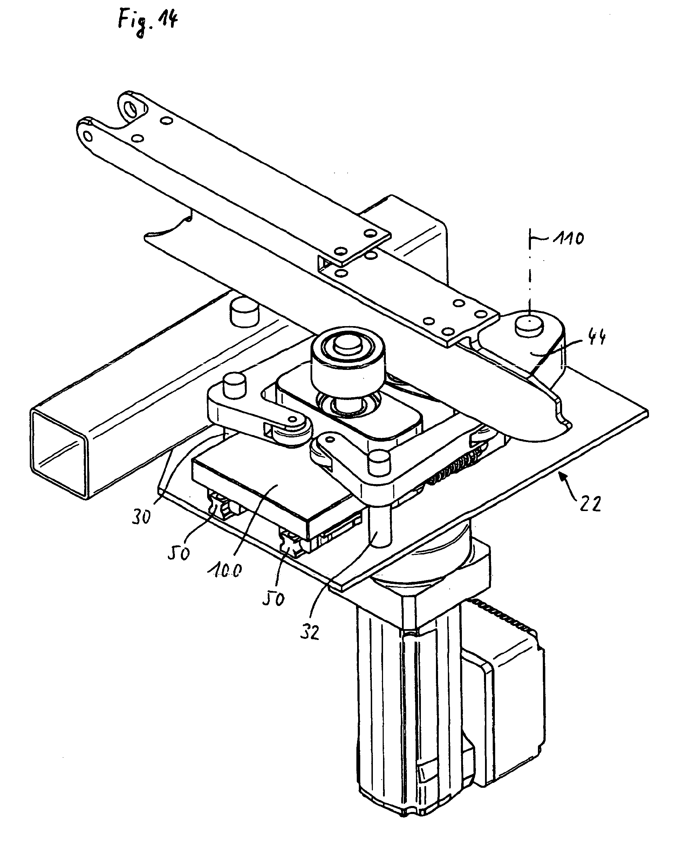

Figur 13 und 14 zeigen eine fünfte Ausführungsform, bei der die Lagereinheit 44 ähnlich wie bei der vierten Ausführungsform um eine parallel zur Drehachse 48 der Antriebsrolle 46 verlaufende Schwenkachse 110 an dem Tragkörper 22 angelenkt ist. Im Übrigen entspricht der Aufbau der zweiten Ausführungsform nach Figur 6 bis 8. Man erkennt an diesem Beispiel, dass im vorliegenden Zusammenhang grundsätzlich jede Linearführung ersetzt werden kann durch eine Schwenklagerung, sofern der Abstand zwischen der Drehachse der Antriebsrolle bzw. der Drehachse der Andruckrolle und der jeweiligen Schwenkachse nicht zu klein gewählt wird, damit die auftretenden Bewegungen klein im Verhältnis zum Schwenkradius bleiben. Daher könnte bspw. bei der fünften Ausführungsform auch die Linearführung 50, mit der die Andruckrolle 90 geführt ist, durch eine Schwenklagerung ersetzt werden, wobei sich der den Andruckkörper tragende Schwenkarm etwa unter 90° zur Verlagerungsrichtung der Linearführung erstrecken müsste. Bei kleinen Auslenkungen ist dann die Verlagerung der Andruckrolle in etwa parallel zu der Linearführung der fünften Ausführungsform.

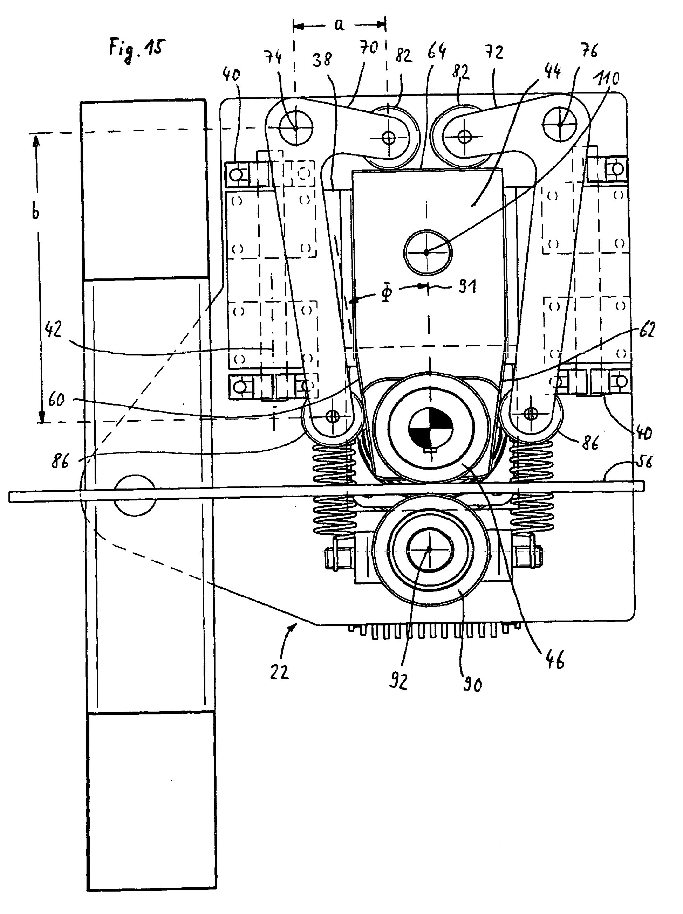

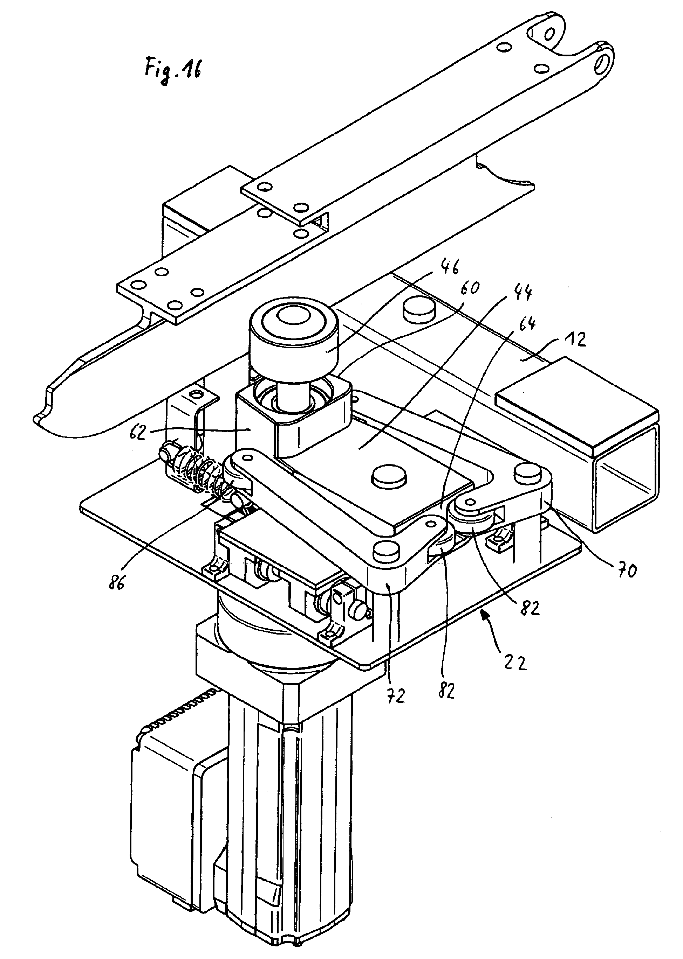

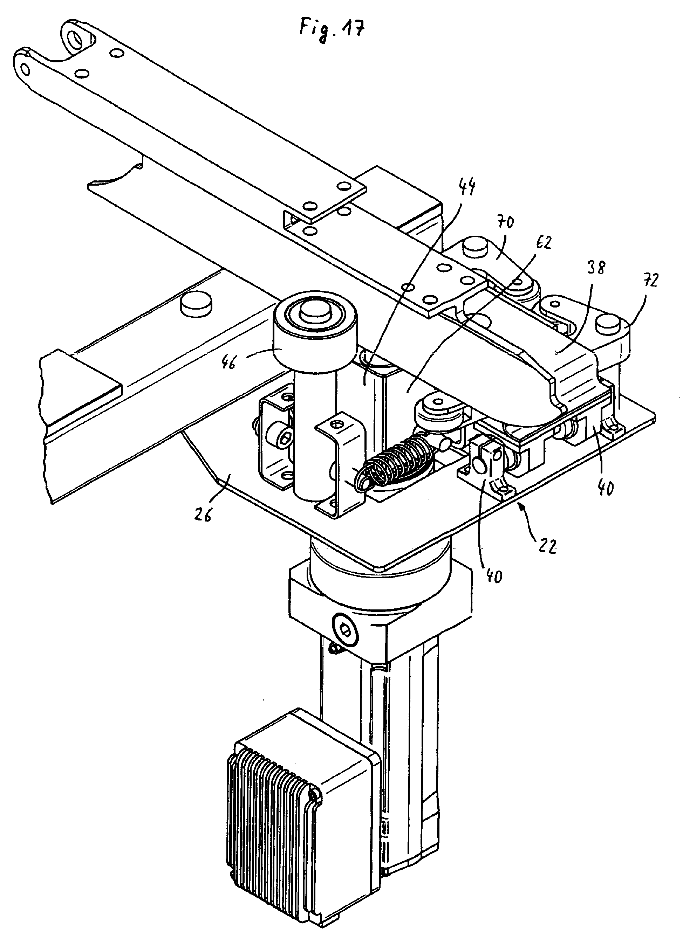

Figur 15 bis 17 zeigen eine sechste Ausführungsform der Erfindung, die ähnlich der ersten Ausführungsform aufgebaut ist. Im Unterschied zur ersten Ausführungsform ist die zweite Linearführung 50, mit der die Lagereinheit 44 dort auf dem Schlitten 38 geführt ist, bei der sechsten Ausführungsform durch ein Schwenklager mit parallel zur Drehachse 48 der Antriebsrolle verlaufender Schwenkachse 110 ersetzt, so dass die Lagereinheit 44 relativ zu dem Schlitten 38, der sich entlang der Verschiebeachsen 42 der ersten Linearführung 40 senkrecht zur Reibfläche 56 verlagern kann, schwenkbar ist. Die Drehachse 92 der Andruckrolle 90 und die Schwenkachsen 74, 76 der Schwenkhebel 70, 72 sind wie beim ersten Ausführungsbeispiel ortsfest bezüglich des Tragkörpers 22 angebracht.

Die Übertragungsflächen 60, 62 sind nicht parallel zueinander und senkrecht zu der Reibfläche 56, wie dies bei der ersten, zweiten und fünften Ausführungsform der Fall ist, sondern V-förmig jeweils unter einem Winkel zu einer Ebene 91 angeordnet, die die Drehachse 48 der Antriebsrolle 46 und die Schwenkachse 110 enthält. Der genannte Winkel, in Figur 15 mit Φ bezeichnet, entspricht dem arc tan-Wert des Längenverhältnisses a/b der Hebelarme der Schwenkhebel 70, 72, so dass sich eine automatische Nachstellung bei Abrieb der Antriebsrolle 46 ergibt. Ein Abrieb entspricht einer Verkleinerung des Durchmessers der Antriebsrolle 46, so dass die Lagereinheit 44 aufgrund der Spannfedern 96 entsprechend weiter in Richtung auf die Andruckrolle 90 bewegt wird, als dies in Figur 15 dargestellt ist. Dabei ist durch den an das Hebelarmlängenverhältnis angepassten Neigungswinkel der Übertragungsflächen 60, 62 sichergestellt, dass kein zusätzliches Spiel zwischen den Übertragungsflächen 60, 62 und den Übertragungsrollen 86 oder zwischen der Andruckfläche 64 und den Übertragungsrollen 82 eintritt.

Eine derartige selbsttätige Nachstellwirkung durch V- bzw. keilförmig angeordnete Übertragungsflächen lässt sich auch bei der zweiten und fünften Ausführungsform realisieren.

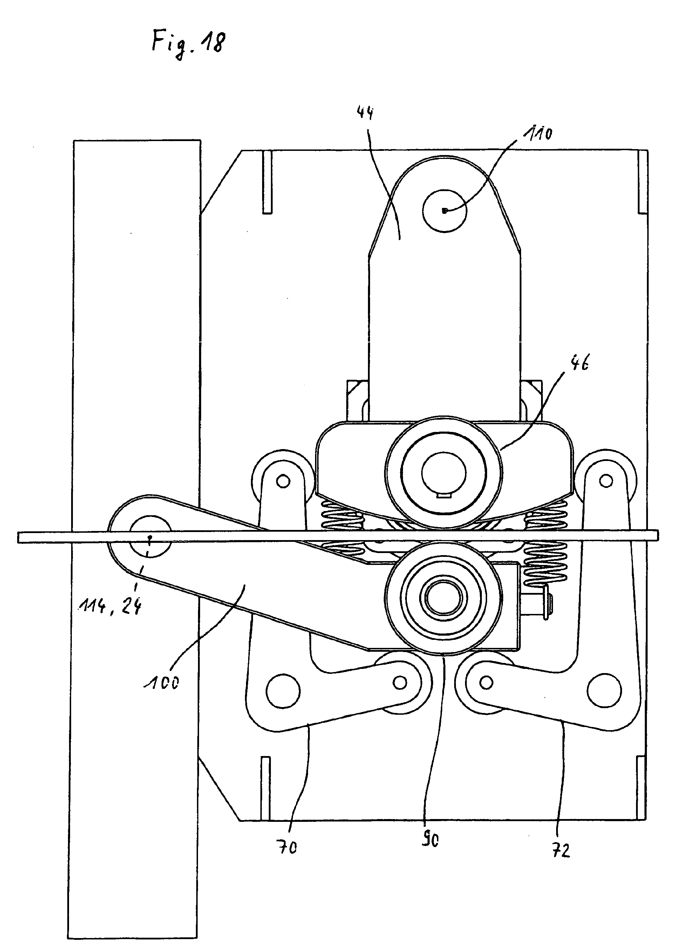

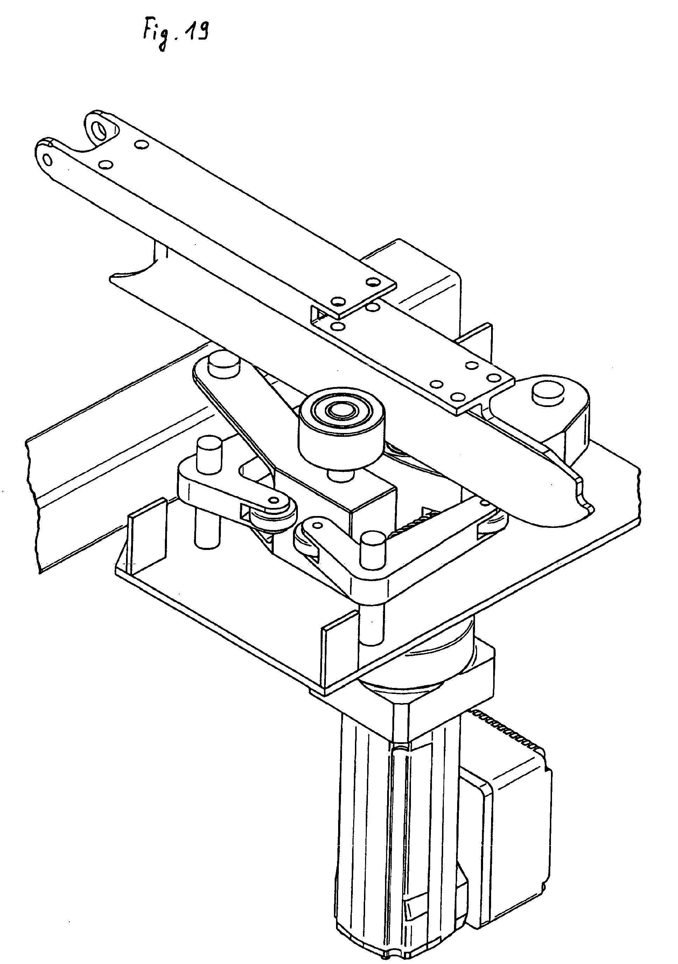

Figur 18 und 19 erläutern eine siebte Ausführungsform der Erfindung, die beispielhaft zeigt, wie auf Linearführungen vollständig verzichtet werden kann. Diese Ausführungsform ähnelt der fünften Ausführungsform nach Figur 13, mit dem Unterschied, dass der die Andruckrolle 90 tragende Andruckkörper 100 nicht auf einer senkrecht zur Reibfläche verlagerbaren Linearführung, sondern schwenkbar um eine weitere Schwenkachse 114 gehalten ist, die parallel zur Schwenkachse 110 verläuft, um die die Lagereinheit 44 verschwenkbar gehalten ist. Die weitere Schwenkachse 114 fällt in dieser Ausführungsform vorteilhafterweise mit der Schwenkachse 24 zusammen, um die der Tragkörper 22 zwecks Fluchtungsausgleich an dem Gestell 12 schwenkbar gehalten ist.

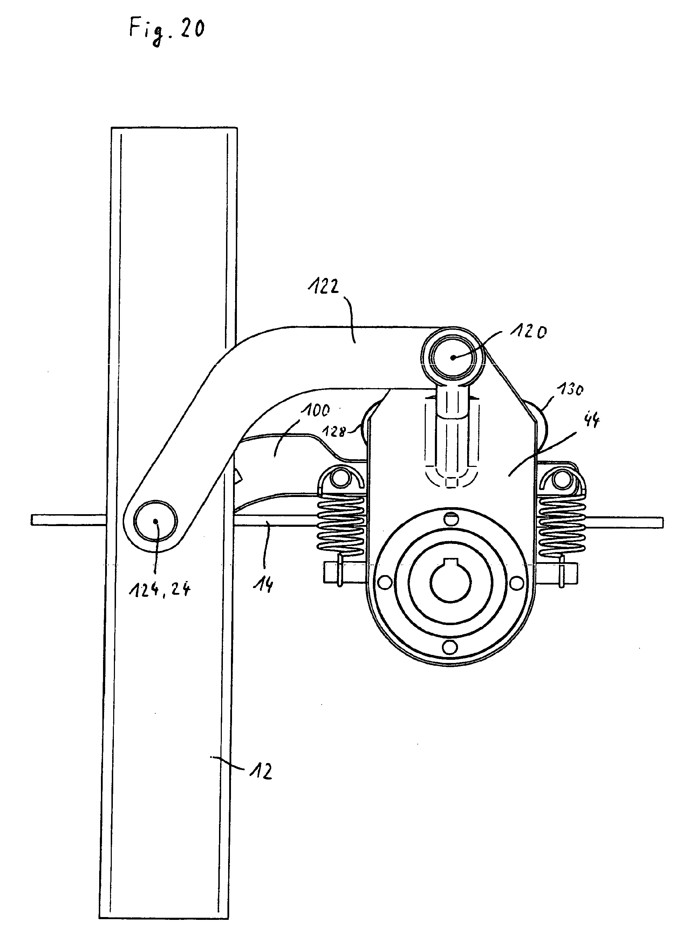

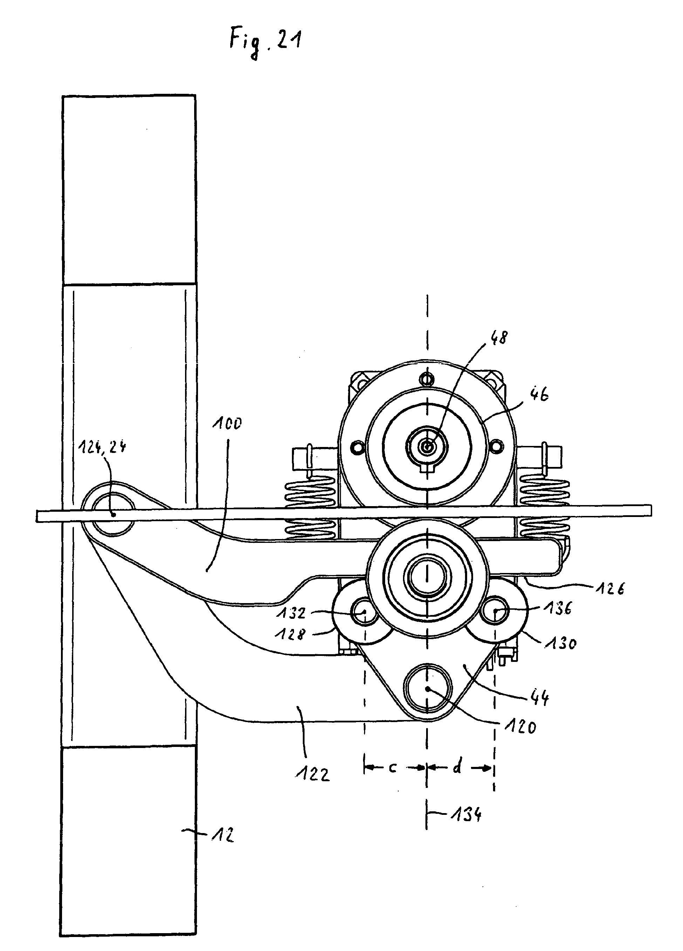

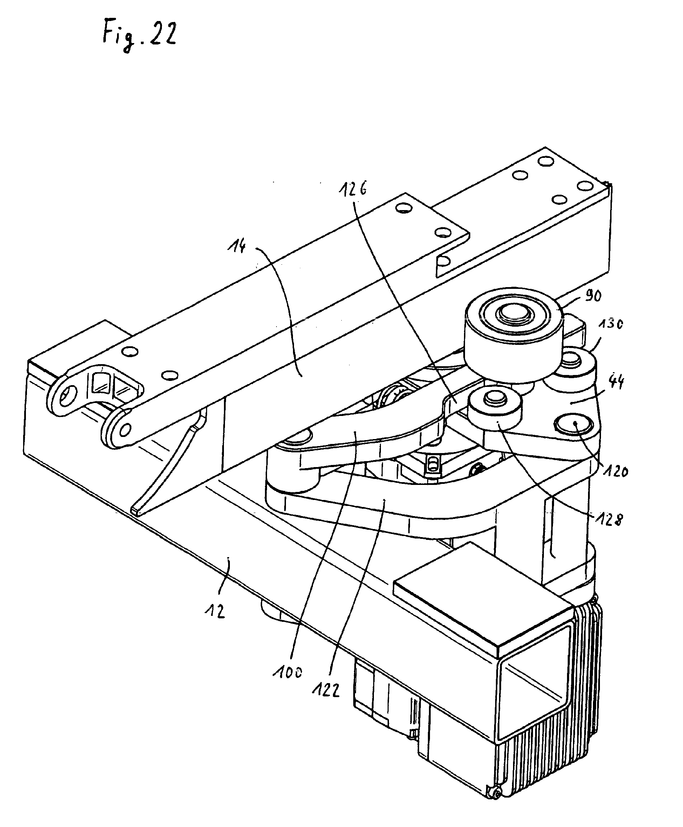

Figur 20 bis 22 zeigen eine achte Ausführungsform der Erfindung, die sich von den zuvor beschriebenen Ausführungsformen dadurch unterscheidet, dass die Lagereinheit 44 mit Antriebsrolle 46 und Antriebsmotor 20 um eine Schwenkachse 120 schwenkbar an einem Haltearm 122 gehalten ist, der wiederum am Gestell 12 um eine Schwenkachse 124 schwenkbar gehalten ist. Ein Tragkörper wird hier nicht benötigt. Die Schwenkachse 124 entspricht der Schwenkachse 24 und gewährleistet einen Fluchtungsausgleich bei seitlichen Lageabweichungen des Reibantriebskörpers 14. Eine Andruckrolle 90 ist auf einem als Schwenkarm ausgebildeten Andruckkörper 100 gehalten, der ebenfalls um die Schwenkachse 124 schwenkbar am Gestell 12 gehalten ist. Der Andruckkörper 100 weist seitlich eine Druckfläche 126 auf, gegen die eine erste oder zweite Andruckrolle 128, 130 zur Anlage kommen kann. Die Andruckrollen 128, 130 sind drehbar auf der Lagereinheit 44 gelagert. Eine erste Drehachse 132 der ersten Andruckrolle 128 weist einen ersten Abstand c von einer die Drehachse 48 der Antriebsrolle 46 und die Schwenkachse 120 der Lagereinheit 44 enthaltenden Mittelebene 134 auf, während eine zweite Drehachse 134 der zweiten Andruckrolle 130 einen Abstand d von der Mittelebene 134 aufweist. Die Abstände c, d sind in der dargestellten Ausführungsform nicht gleich, sondern so gewählt, dass bei einer (geringen) Schwenkbewegung der Lagereinheit 44 um die Schwenkachse 120, die durch eine über die Antriebsrolle eingeleitete Antriebskraft in der einen oder anderen Richtung hervorgerufen wird, der Andruckkörper 100 mit nach Möglichkeit gleicher Kraft durch die erste bzw. zweite Andruckrolle 128, 130 gegen die Gegenfläche 58 des Reibantriebskörpers 14 gepresst wird, so dass der unterschiedliche Abstand der Andruckpunkte, an denen die erste bzw. zweite Andruckrolle mit der Druckfläche 126 in Kontakt kommt, von der Schwenkachse 124 ausgeglichen ist.

Im Betrieb erfährt die Lagereinheit 44 aufgrund des Antriebs der Antriebsrolle 46 und deren Kontakt mit dem Antriebsschwert bzw. Reibantriebskörper 14 ein Schwenkmoment um die Schwenkachse 120 und eine mehr oder weniger geringfügige Auslenkung, so dass abhängig von der Antriebsrichtung die erste oder zweite Andruckrolle 128, 130 gegen die Druckfläche 126 zur Anlage gelangt und den Haltearm 122 um die Schwenkachse 124 gegen die Gegenfläche 58 verlagert, so dass sowohl die Antriebsrolle 46 als auch die Andruckrolle 90 jeweils mit gleicher Normalkraft gegen die Reibfläche 56 bzw. die Gegenfläche 58 gedrückt werden.

Zweckmäßig ist es, wenn der Abstand c kleiner gewählt wird als der Abstand d, da die dem Abstand c zugeordnete erste Andruckrolle 128 an einer kürzeren Hebellänge des Haltearms 122 angreift als die dem Abstand d zugeordnete zweite Andruckrolle 130, so dass im Ergebnis erreicht wird, dass die Andruckkraft von Andruckrolle 90 und Antriebsrolle 46 für beide Antriebsrichtungen der Antriebsrolle 46 gleich groß ist, bezogen auf ein jeweils gleich großes Antriebsmoment der Antriebsrolle.

Die Verhältnisse bei der Übertragung der Reibkraft in Form einer tangential zur Reibfläche wirkenden Antriebskraft durch die Antriebsrolle können nicht mit der üblichen Haft- bzw. Gleitreibung gleichgesetzt werden, so dass auch das Coulombsche Reibungsgesetz (Reibkraft als Produkt aus Reibkoeffizient und Normalkraft) nicht unverändert gilt. Die tangentiale Kraftübertragung zwischen einer Antriebsrolle und einer Reibfläche setzt voraus, dass dazwischen ein Schlupf auftritt. Der Kontaktbereich kann in Haft- und ein Gleitgebiet aufgeteilt werden, wobei der Anteil des Gleitgebietes mit zunehmender Antriebskraft und konstanter Normalkraft ansteigt.

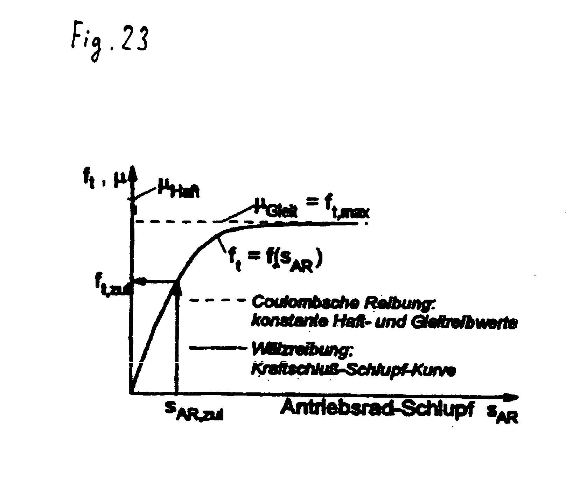

Das Verhalten eines Reibradantriebs wird durch die in Fig. 23 gezeigte Kraftschluss-Schlupf-Kurve $f_t = f(s_{AR})$ charakterisiert, wobei der Kraftschluss das Verhältnis von übertragener Antriebskraft zu Normalkraft bezeichnet, $f_t = F_A/F_N$, und der Schlupf als Geschwindigkeitsdifferenz zwischen Umfangsgeschwindigkeit der Antriebsrolle und der Geschwindigkeit der Reibantriebskörpers, bezogen auf die Umfangsgeschwindigkeit der Antriebsrolle, definiert ist:

$$s_{AR} = (v_{AR} - v_K)/(v_{AR}).$$

Steigt bei konstanter Normalkraft die übertragene Antriebskraft, nimmt auch der Schlupf zu. Bei großem Schlupf sind tangentialer Kraftschluss und Gleitreibungsbeiwert gleich, hieraus ergibt sich die theoretisch maximal übertragbare Antriebskraft als Produkt aus Normalkraft und Gleitreibungsbeiwert.

Ist die Kraftschluss-Schlupf-Kurve für eine gewählte Werkstoffpaarung bekannt, kann für den zulässigen Grenzschlupf $s_{AR, zul}$ der diesem Schlupf entsprechende Kraftschluss $f_{t, zul}$ entnommen werden. Damit kann für eine vorgegebene, z. B. konstruktiv begrenzte Normalkraft die übertragbare Antriebskraft bestimmt werden, die gegebenenfalls kurzzeitig überschritten werden kann.

Eine proportionale Anpressung zwischen Antriebsrolle und Reibfläche, wie sie mit der Erfindung erzielt werden kann, bedeutet eine lineare Zunahme der Normalkraft mit der Antriebskraft bei einem konstanten Kraftschluss, beispielsweise $f_t = 0,5$, und damit auch einen konstanten Schlupf.

Bezugszeichenliste

| | |
|---|---|
| 2 | Wagen |
| 4 | Chassis |
| 6 | Tragrolle |
| 8 | Führungsrolle |
| 10 | Führungsschiene |
| 12 | Gestell |
| 13 | Längs-/Förderrichtung |
| 14 | Antriebsschwert (Reibantriebskörper) |
| 16 | Reibradantrieb |
| 20 | Antriebsmotor |
| 22 | Tragkörper |
| 24 | Schwenkachse |
| 26, 28 | Platte |
| 30, 32 | Lagerzapfen |
| 34, 36 | Befestigungswinkel |
| 38 | Schlitten |
| 40 | erste Linearführung |
| 42 | Verschiebeachse |
| 44 | Lagereinheit |
| 46 | Antriebsrolle |
| 48 | Drehachse |
| 50 | zweite Linearführung |
| 52 | Verschiebeachse |
| 54 | Umfangsfläche |
| 56 | Reibfläche |
| 58 | Gegenfläche |
| 60, 62 | Übertragungsflächen |
| 64 | Andruckfläche |
| 70, 72 | Schwenkhebel |
| 74, 76 | Schwenkachse |
| 78 | erster Hebelarm |
| 80 | Drehachse |
| 82 | Übertragungsrolle |
| 84 | zweiter Hebelarm |
| 86 | Übertragungsrolle |
| 88 | Drehachse |
| 89 | Ebene |

90 Andruckrolle (Andruckelement)
91 Ebene
92 Drehachse

94 Lagerzapfen
96 Spannfeder
100 Andruckkörper
102 Steuerfläche
104 Steuerrolle
106 Scheitelpunkt
110 Schwenkachse
112 Steuerfläche
114 weitere Schwenkachse
120 Schwenkachse
122 Haltearm
124 Schwenkachse
126 Druckfläche
128 erste Andruckrolle
130 zweite Andruckrolle
132 erste Drehachse
134 Mittelebene
136 zweite Drehachse

a Abstand 80 -74, 76
b Abstand 88 - 74, 76
c Abstand 132, 134
d Abstand 136, 134
Φ Winkel zwischen 60, 62 und 91

**Patentansprüche**

1. Reibradantrieb (16) mit einer drehantreibbaren Antriebsrolle (46), die an einer Lagereinheit (44) um eine Drehachse (48) drehbar gelagert ist, wobei die Lagereinheit (44) quer zu der Drehachse (48) verlagerbar geführt und eine Umfangsfläche (54) der Antriebsrolle (46) mit einer Reibfläche (56) in Antriebseingriff bringbar ist, wobei die Lagereinheit (44) mit einer ersten mechanischen Zwangsführung (60, 64, 70) gekoppelt ist, durch die die Antriebsrolle (46) ansprechend auf eine in einer ersten Richtung wirkende Antriebskraft mit einer mit ansteigender Antriebskraft ansteigenden Anpresskraft selbsttätig gegen die Reibfläche (56) anpressbar ist, und wobei die Lagereinheit (44) mit einer zweiten mechanischen Zwangsführung (62, 64, 72) gekoppelt ist, durch die die Antriebsrolle (46) ansprechend auf eine in einer entgegengesetzten zweiten Richtung wirkende Antriebskraft mit einer mit ansteigender Antriebskraft ansteigenden Anpresskraft selbsttätig gegen die Reibfläche, (56) anpressbar ist.

2. Reibradantrieb nach Anspruch 1, **dadurch gekennzeichnet, dass** die Anpresskraft proportional zur Antriebskraft ist.

3. Reibradantrieb nach Anspruch 1 oder 2, **dadurch gekennzeichnet, dass** zwei zweiarmige Schwenkhebel (70, 72), die in einer antriebskraftfreien Ruheposition der Lagereinheit (44) beiderseits, insbesondere symmetrisch zu, einer die Drehachse (48) enthaltenden und senkrecht zur Reibfläche (56) verlaufenden Ebene (89) angeordnet sind, mit ersten Hebelarmen (78) auf einer parallel zur Reibfläche (56) angeordneten Andruckfläche (64) der Lagereinheit (44) und jeweils mit einem zweiten Hebelarm (84) auf einer jeweils senkrecht zur Reibfläche (56) angeordneten Übertragungsfläche (60, 62) der Lagereinheit abstützbar sind.

4. Reibradantrieb nach einem der Ansprüche 1 bis 3, **dadurch gekennzeichnet, dass** die Lagereinheit (44) um eine auf einem senkrecht zur Reibfläche (56) verlagerbaren Schlitten (38) und parallel zur Drehachse (48) der Antriebsrolle (46) angeordnete Schwenkachse (110) schwenkbar gehalten ist.

5. Reibradantrieb nach Anspruch 4, **dadurch gekennzeichnet, dass** der Schlitten (38) entweder entlang einer Linearführung (40) oder um eine parallel zur Drehachse (48) angeordnete Schwenkachse senkrecht zur Reibfläche (56) verlagerbar geführt ist.

6. Reibradantrieb nach Anspruch 1 oder 2, **dadurch gekennzeichnet, dass** ein Andruckelement (90) gegen eine der Reibfläche (56) gegenüberliegende Gegenfläche (58), die eine weitere, zur Reibfläche (56) parallele Außenfläche eines Reibantriebskörpers (14) ist, anpressbar ist, wobei zwei zweiarmige Schwenkhebel (70, 72), die in einer antriebskraftfreien Ruheposition der Lagereinheit (44) beiderseits, insbesondere symmetrisch zu, einer die Drehachse (48) der Antriebsrolle (46) enthaltenden und senkrecht zu der Reibfläche (56) verlaufenden Ebene (89) angeordnet sind, mit ersten Hebelarmen (78) jeweils auf einer senkrecht zur Reibfläche (56) angeordneten Übertragungsfläche (60, 62) der Lagereinheit (44) und mit zweiten Hebelarmen (84) auf einer parallel zu der Reibfläche (56) angeordneten Andruckfläche (64) eines das Andruckelement (90) tragenden und senkrecht zur Reibfläche (56) verlagerbar geführten Andruckkörpers (100) abstützbar sind.

7. Reibradantrieb nach Anspruch 6, **dadurch gekennzeichnet, dass** die Lagereinheit (44) entlang einer parallel zur Reibfläche (56) ausgerichteten Linearführung (40) oder um eine zu der Drehachse (48) der Antriebsrolle (46) parallele, insbesondere auf einem Tragkörper (22) angeordnete Schwenkachse (110) senkrecht zur Reibfläche (56) verlagerbar geführt ist.

8. Reibradantrieb nach Anspruch 6 oder 7, **dadurch gekennzeichnet, dass** das Andruckelement (90) entlang einer Linearführung (40), die senkrecht zur Reibfläche (56) angeordnet ist, oder um eine zur Drehachse (48) der Antriebsrolle (46) parallele, insbesondere auf einem Tragkörper (22) angeordnete Schwenkachse (114) senkrecht zur Reibfläche (56) verlagerbar geführt ist.

9. Reibradantrieb nach Anspruch 1 oder 2, **dadurch gekennzeichnet, dass** die Lagereinheit (44) an einer insbesondere V-förmig ausgebildeten Steuerfläche (102), die in einer antriebskraftfreien Ruheposition der Lagereinheit (44) beiderseits, insbesondere symmetrisch zu, einer die Drehachse (48) der Antriebsrolle (46) enthaltenden und senkrecht zu der Reibfläche (56) verlaufenden Ebene (89) angeordnet ist, zwangsgeführt ist, wobei eine Verlagerung der Lagereinheit (44) parallel zur Reibfläche (56) gleichzeitig eine Verlagerung in Richtung der Reibfläche (56) bewirkt.

10. Reibradantrieb nach einem der Ansprüche 1 bis 3 oder 9, **dadurch gekennzeichnet, dass** die Lagereinheit (44) entlang einer ersten Linearführung (40), die parallel oder senkrecht zur Reibfläche (56) ausgerichtet ist, auf einem Schlitten (38) verlagerbar geführt ist, der seinerseits entlang einer zweiten Linearführung (50), die senkrecht zu der ersten Linearführung ausgerichtet ist, verlagerbar geführt ist.

11. Reibradantrieb nach Anspruch 1, 2 oder 9, **dadurch gekennzeichnet, dass** die Lagereinheit (44) auf einem senkrecht zur Reibfläche (56) verlagerbaren Schlitten (38) um eine auf dem Schlitten (38) und parallel zur Drehachse (48) der Antriebsrolle (46) angeordnete Schwenkachse (110) verschwenkbar gehalten ist, wobei der Schlitten (38) entlang einer insbesondere bogenförmig ausgebildeten Steuerfläche (112), die in einer antriebskraftfreien Ruheposition der Lagereinheit (44) beiderseits, insbesondere symmetrisch zu, einer die Drehachse (48) der Antriebsrolle (46) enthaltenden und senkrecht zu der Reibfläche (56) verlaufenden Ebene (89) angeordnet ist, zwangsgeführt ist, wobei eine Verlagerung der Lagereinheit (44) parallel zur Reibfläche (56) gleichzeitig eine Verlagerung in Richtung der Reibfläche (56) bewirkt.

12. Reibradantrieb nach Anspruch 11, **dadurch gekennzeichnet, dass** der Schlitten (38) entlang einer senkrecht zur Reibfläche (56) ausgerichteten Linearführung (40) oder um eine zu der Drehachse (48) der Antriebsrolle (46) parallele Schwenkachse (114) senkrecht zur Reibfläche (56) verlagerbar geführt ist.

13. Reibradantrieb nach einem der Ansprüche 3 bis 8, **dadurch gekennzeichnet, dass** die Übertragungsflächen (60, 62) V-förmig unter einem Winkel zu der Ebene (89) angeordnet sind, wobei ein Abstand zwischen Übertragungsrollen (82) der ersten Hebelarme (78) und der Andruckfläche (64) und jeweiligen Abständen zwischen Übertragungsrollen (86) der zweiten Hebelarme (84) und den Übertragungsflächen (60, 62) bei veränderlichem Abstand der Schwenkachse (110) der Lagereinheit (44) von den Schwenkachsen (74, 76) der Schwenkhebel (70, 72) im wesentlichen konstant bleiben.

14. Reibradantrieb nach einem der Ansprüche 7 bis 9, **dadurch gekennzeichnet, dass** das Andruckelement (90) relativ zu der Lagereinheit (44) federvorgespannt (96) ist.

15. Reibradantrieb nach einem der Ansprüche 1 bis 6 und 11 bis 14, **dadurch gekennzeichnet, dass** ein an einem Tragkörper (22) gehaltenes Andruckelement (90), das gegen eine der Reibfläche (56) gegenüberliegende Gegenfläche (58), die eine weitere, zur Reibfläche (56) parallele Außenfläche eines Reibantriebskörpers (14) ist, anpressbar ist, relativ zu der Lagereinheit (44) federvorgespannt (96) ist.

16. Reibantrieb nach einem der vorangehenden Ansprüche, bei dem die Lagereinheit (44) und/oder der Andruckkörper (100) um eine Schwenkachse (114) senkrecht zu der Reibfläche (56) verlagerbar geführt ist, wobei insbesondere die Schwenkachse (114) mit einer Schwenkachse (24) übereinstimmt, an der ein Tragkörper (22) an einem Gestell (12) schwenkbeweglich angelenkt ist.

## Claims

1. Friction wheel drive (16) with a drive roll (46) which can be driven rotatably and which is mounted on a bearing unit (44) such that it can be rotated around an axis of rotation (48), wherein the bearing unit (44) is held such that it can be displaced transversely to the axis of rotation (48) and a circumferential surface (54) of the drive roll (46) can be brought into driving engagement with a friction surface (56), wherein the bearing unit (44) is coupled to a first mechanical forced guiding means (60, 64, 70), through which the drive roll (46), responding to a driving force acting in a first direction, can be pressed automatically against the friction surface (56) with a pressing force that increases with increasing driving force, and wherein the bearing unit (44) is coupled to a second mechanical forced guiding means (62, 64, 72), through which the drive roll (46), responding to a driving force acting in an opposed second direction, can be pressed automatically against the friction surface (56) with a pressing force that increases with increasing driving force.

2. Friction wheel drive according to claim 1, **characterised in that** the pressing force is proportional to the driving force.

3. Friction wheel drive according to claim 1 or 2, **characterised in that** two two-armed pivoting levers (70, 72), which in a resting position of the bearing unit (44) that is free of driving force, are arranged on both sides of, in particular symmetrically to, a plane (89) containing the axis of rotation (48) and running perpendicular to the friction surface (56), can be supported with first lever arms (78) on a pressure surface (64) of the bearing unit (44), this surface being arranged parallel to the friction surface (56), and respectively with a second lever arm (84) on a transmission surface (60, 62) of the bearing unit, this surface being arranged in each case perpendicular to the friction surface (56).

4. Friction wheel drive according to one of the claims 1 to 3, **characterised in that** the bearing unit (44) is held such that it can be pivoted around a pivot axis (110) on a slide (38) that can be displaced perpendicular to the friction surface (56) and is arranged parallel to the axis of rotation (48) of the drive roll (46).

5. Friction wheel drive according to claim 4, **characterised in that** the slide (38) is held such that it can be displaced either along a linear guide (40) or around a pivot axis that is parallel to the axis of rotation (48), perpendicular to the friction surface (56).

6. Friction wheel drive according to claim 1 or 2, **characterised in that** a pressure element (90) can be pressed against a counter-surface (58) which lies opposite the friction surface (56) and which is an additional external surface of a friction drive element (14), this outer surface lying parallel to the friction surface (56), wherein two two-armed pivoting levers (70, 72), which in a resting position of the bearing unit (44), free of driving force, are arranged on both sides of, in particular symmetrically to, a plane (89) containing the axis of rotation (48) of the drive roll (46) and running perpendicular to the friction surface (56), can be supported with first lever arms (78) respectively on a transmission surface (60, 62) of the bearing unit (44), this surface being arranged perpendicular to the friction surface (56), and with second lever arms (84) on a pressure surface (64) of a pressing body (100) which carries the pressure element (90) and is held such that it can be displaced perpendicular to the friction surface (56), this pressing surface being arranged parallel to the friction surface (56).

7. Friction wheel drive according to claim 6, **characterised in that** the bearing unit (44) is held such that it can be displaced along a linear guide (40) that is aligned parallel to the friction surface (56), or around a pivot axis (110) that is arranged parallel to the axis of rotation (48) of the drive roll (46), in particular on a carrying element (22), perpendicular to the friction surface (56).

8. Friction wheel drive according to claim 6 or 7, **characterised in that** the pressure element (90) is held such that it can be displaced along a linear guide (40) that is arranged perpendicular to the friction surface (56), or around a pivot axis (114) that is arranged parallel to the axis of rotation (48) of the drive roll (46), in particular on a carrying element (22), perpendicular to the friction surface (56).

9. Friction wheel drive according to claim 1 or 2, **characterised in that** the bearing unit (44) is guided in a restricted manner on a control surface (102) which is formed in particular in a V-shape and which, in a resting position of the bearing unit (44) that is free of driving force, is arranged on both sides of, in particular symmetrically to, a plane (89) containing the axis of rotation (48) of the drive roll (46) and running perpendicular to the friction surface (56), wherein a displacement of the bearing unit (44) parallel to the friction surface (56) simultaneously effects a displacement in the direction of the friction surface (56).

10. Friction wheel drive according to one of the claims 1 to 3 or 9, **characterised in that** the bearing unit (44) is held such that it can be displaced along a first linear guide (40), which is aligned parallel or perpendicular to the friction surface (56), on a slide (38), which in turn is held such that it can be displaced along a second linear guide (50) that is aligned perpendicular to the first linear guide.

11. Friction wheel drive according to claim 1, 2 or 9, **characterised in that** the bearing unit (44) is held on a slide (38) that can be displaced perpendicular to the friction surface (56), such that it can pivot around a pivot axis (110) that is arranged on the slide (38) and parallel to the axis of rotation (48) of the drive roll (46), wherein the slide (38) is guided in a restricted manner along a control surface (112), particularly in the shape of an arc, which in a resting position of the bearing unit (44), , free of driving force, is arranged on both sides of, in particular symmetrically to, a plane (89) containing the axis of rotation (48) of the drive roll (46) and running perpendicular to the friction surface (56), wherein a displacement of the bearing unit (44) parallel to the friction surface (56) simultaneously effects a displacement in the direction of the friction surface (56).

12. Friction wheel drive according to claim 11, **characterised in that** the slide (38) is held such that it can be displaced along a linear guide (40) that is aligned perpendicular to the friction surface (56) or around a pivot axis (114) that is parallel to the axis of rotation (48) of the drive roll (46), perpendicular to the friction surface (56).

13. Friction wheel drive according to one of the claims 3 to 8, **characterised in that** the transmission surfaces (60, 62) are arranged in a V-shape at an angle to the plane (89), wherein a distance between transmission rollers (82) of the first lever arms (78) and the pressure surface (64), and respective distances between transmission rollers (86) of the second lever arms (84) and the transmission surfaces (60, 62), remain essentially constant in the case of a changing distance between the pivot axis (110) of the bearing unit (44) and the pivot axes (74, 76) of the pivoting levers (70, 72).

14. Friction wheel drive according to one of the claims 7 to 9, **characterised in that** the pressure element (90) is under spring tension (96) relative to the bearing unit (44).

15. Friction wheel drive according to one of the claims 1 to 6 and 11 to 14, **characterised in that** a pressure element (90), which is held on a carrying element (22), and which can be pressed against a counter-surface (58) lying opposite the friction surface (56), this counter-surface being an additional outer surface of a friction drive element (14) that is parallel to the friction surface (56), is under spring tension (96) relative to the bearing unit (44).

16. Friction drive according to one of the preceding claims, in which the bearing unit (44) and/or the pressing body (100) is held such that it can be displaced around a pivot axis (114) perpendicular to the friction surface (56), wherein in particular the pivot axis (114) corresponds to a pivot axis (24) on which a carrying element (22) is articulated, in a pivoting manner, on a frame (12).

**Revendications**

1. Entraînement par friction (16) comportant un rouleau d'entraînement (46) qui peut être entraîné par rotation et qui est monté sur une unité de palier (44) de telle manière qu'il peut être mis en rotation autour d'un axe de rotation (48), dans lequel l'unité de palier (44) est maintenue d'une telle manière qu'elle peut être déplacée dans le sens de la transversale par rapport à l'axe de rotation (48) et qu'une surface circonférentielle (54) du rouleau d'entraînement (46) peut être mise en prise d'entraînement avec une surface de friction (56), dans lequel l'unité de palier (44) est accouplée à un premier moyen de guidage forcé mécanique (60, 64, 70), par le biais duquel le rouleau d'entraînement (46), en réaction à une force d'entraînement agissant dans une première direction, peut être comprimé automatiquement contre la surface de friction (56) avec une force de compression qui augmente avec une force d'entraînement croissante, et dans lequel l'unité de palier (44) est accouplée à un second moyen de guidage forcé mécanique (62, 64, 72), par le biais duquel le rouleau d'entraînement (46), en réaction à une force d'entraînement agissant dans une seconde direction opposée, peut être comprimé automatiquement contre la surface de friction (56) avec une force de compression qui augmente avec une force d'entraînement croissante.

2. Entraînement par friction selon la revendication 1, **caractérisé en ce que** la force de compression est proportionnelle à la force d'entraînement.

3. Entraînement par friction selon la revendication 1 ou la revendication 2, **caractérisé en ce que** deux leviers de pivotement à deux bras (70, 72), qui dans une position de repos de l'unité de palier (44) qui est exempte de toute force d'entraînement, sont arrangés des deux côtés d'un, en particulier de manière symétrique par rapport à un, plan (89) contenant l'axe de rotation (48) et s'étendant de manière perpendiculaire par rapport à la surface de friction (56), peuvent être supportés par des premiers bras de levier (78) sur une surface de pression (64) de l'unité de palier (44), cette surface étant arrangée de manière parallèle par rapport à la surface de friction (56), et respectivement par un second bras de levier (84) sur une surface de transmission (60, 62) de l'unité de palier, cette surface étant arrangée dans chaque cas de manière perpendiculaire par rapport à la surface de friction (56).

4. Entraînement par friction selon l'une quelconque des revendications 1 à 3, **caractérisé en ce que** l'unité de palier (44) est maintenue d'une telle manière qu'elle peut être pivotée autour d'un axe de pivotement (110) sur une coulisse (38) qui peut être déplacée de manière perpendiculaire par rapport à la surface de friction (56) et est arrangée de manière parallèle par rapport à l'axe de rotation (48) du rouleau d'entraînement (46).

5. Entraînement par friction selon la revendication 4, **caractérisé en ce que** la coulisse (38) est maintenue d'une telle manière qu'elle peut être déplacée soit le long d'un dispositif de guidage linéaire (40) soit autour d'un axe de pivotement qui est parallèle par rapport à l'axe de rotation (48), de manière perpendiculaire par rapport à la surface de friction (56).

6. Entraînement par friction selon la revendication 1 ou la revendication 2, **caractérisé en ce qu'**un élément de pression (90) peut être comprimé contre une contre-surface (58) qui repose de manière opposée par rapport à la surface de friction (56) et qui est une surface externe supplémentaire d'un élément d'entraînement par friction (14), cette surface extérieure reposant de manière parallèle par rapport à la surface de friction (56), dans lequel deux leviers de pivotement à deux bras (70, 72), qui dans une position de repos de l'unité de palier (44), exempte de toute force d'entraînement, sont arrangés des deux côtés d'un, en particulier de manière symétrique par rapport à un, plan (89) contenant l'axe de rotation (48) du rouleau d'entraînement (46) et s'étendant de manière perpendiculaire par rapport à la surface de friction (56), peuvent être supportés par des premiers bras de levier (78) respectivement sur une surface de transmission (60, 62) de l'unité de palier (44), cette surface étant arrangée de manière perpendiculaire par rapport à la surface de friction (56), et par des seconds bras de levier (84) sur une surface de pression (64) d'un corps de compression (100) qui porte l'élément de pression (90) et est maintenue d'une telle manière qu'elle peut être déplacée de manière perpendiculaire par rapport à la surface de friction (56), cette surface de compression étant arrangée de manière parallèle par rapport à la surface de friction (56).

7. Entraînement par friction selon la revendication 6, **caractérisé en ce que** l'unité de palier (44) est maintenue d'une telle manière qu'elle peut être déplacée le long d'un dispositif de guidage linéaire (40) qui est aligné de manière parallèle par rapport à la surface de friction (56), ou autour d'un axe de pivotement (110) qui est arrangé de manière parallèle par rapport à l'axe de rotation (48) du rouleau d'entraînement (46), en particulier sur un élément de support (22), de manière perpendiculaire par rapport à la surface de friction (56).

8. Entraînement par friction selon la revendication 6 ou la revendication 7, **caractérisé en ce que** l'élément de pression (90) est maintenu d'une telle manière qu'il peut être déplacé le long d'un dispositif de guidage linéaire (40) qui est arrangé de manière perpendiculaire par rapport à la surface de friction (56), ou autour d'un axe de pivotement (114) qui est arrangé de manière parallèle par rapport à l'axe de rotation (48) du rouleau d'entraînement (46), en particulier sur un élément de support (22), de manière perpendiculaire par rapport à la surface de friction (56).

9. Entraînement par friction selon la revendication 1 ou la revendication 2, **caractérisé en ce que** l'unité de palier (44) est guidée d'une manière restreinte sur une surface de contrôle (102) qui est formée en particulier en forme de V et qui, dans une position de repos de l'unité de palier (44) qui est exempte de toute force d'entraînement, est arrangée des deux côtés d'un, en particulier de manière symétrique par rapport à un, plan (89) contenant l'axe de rotation (48) du rouleau d'entraînement (46) et s'étendant de manière perpendiculaire par rapport à la surface de friction (56), dans lequel un déplacement de l'unité de palier (44) de manière parallèle par rapport à la surface de friction (56) effectue simultanément un déplacement dans la direction de la surface de friction (56).

10. Entraînement par friction selon l'une quelconque des revendications 1 à 3 ou la revendication 9, **caractérisé en ce que** l'unité de palier (44) est maintenue d'une telle manière qu'elle peut être déplacée le long d'un premier dispositif de guidage linéaire (40), qui est aligné de manière parallèle ou de manière perpendiculaire par rapport à la surface de friction (56), sur une coulisse (38), qui est à son tour maintenue d'une telle manière qu'elle peut être déplacée le long d'un second dispositif de guidage linéaire (50) qui est aligné de manière perpendiculaire par rapport au premier dispositif de guidage linéaire.

11. Entraînement par friction selon les revendications 1, 2 ou 9, **caractérisé en ce que** l'unité de palier (44) est maintenue sur une coulisse (38) qui peut être déplacée de manière perpendiculaire par rapport à la surface de friction (56), d'une telle manière qu'elle peut pivoter autour d'un axe de pivotement (110) qui est arrangé sur la coulisse (38) et de manière parallèle par rapport à l'axe de rotation (48) du rouleau d'entraînement (46), dans lequel la coulisse (38) est guidée d'une manière restreinte le long d'une surface de contrôle (112), en particulier sous la forme d'un arc, qui dans une position de repos de l'unité de palier (44), exempte de toute force d'entraînement, est arrangée des deux côtés d'un, en particulier de manière symétrique par rapport à un, plan (89) contenant l'axe de rotation (48) du rouleau d'entraînement (46) et s'étendant de manière perpendiculaire par rapport à la surface de friction (56), dans lequel un déplacement de l'unité de palier (44) de manière parallèle par rapport à la surface de friction (56) effectue simultanément un déplacement dans la direction de la surface de friction (56).

12. Entraînement par friction selon la revendication 11, **caractérisé en ce que** la coulisse (38) est maintenue d'une telle manière qu'elle peut être déplacée le long d'un dispositif de guidage linéaire (40) qui est aligné de manière perpendiculaire par rapport à la surface de friction (56) ou autour d'un axe de pivotement (114) qui est parallèle par rapport à l'axe de rotation (48) du rouleau d'entraînement (46), de manière perpendiculaire par rapport à la surface de friction (56).

**13.** Entraînement par friction selon l'une quelconque des revendications 3 à 8, **caractérisé en ce que** les surfaces de transmission (60, 62) sont arrangées en une forme de V selon un angle par rapport au plan (89), dans lequel une distance entre des rouleaux de transmission (82) des premiers bras de levier (78) et la surface de pression (64), et des distances respectives entre des rouleaux de transmission (86) des seconds bras de levier (84) et les surfaces de transmission (60, 62), restent sensiblement constantes dans le cas d'une distance changeante entre l'axe de pivotement (110) de l'unité de palier (44) et les axes de pivotement (74, 76) des leviers de pivotement (70, 72).

**14.** Entraînement par friction selon l'une quelconque des revendications 7 à 9, **caractérisé en ce que** l'élément de pression (90) est sous une tension à ressort (96) par rapport à l'unité de palier (44).

**15.** Entraînement par friction selon l'une quelconque des revendications 1 à 6 et 11 à 14, **caractérisé en ce qu'**un élément de pression (90), qui est maintenu sur un élément de support (22), et qui peut être comprimé contre une contre-surface (58) reposant de manière opposée par rapport à la surface de friction (56), cette contre-surface étant une surface extérieure supplémentaire d'un élément d'entraînement par friction (14) qui est parallèle par rapport à la surface de friction (56), est sous tension de ressort (96) par rapport à l'unité de palier (44).

**16.** Entraînement par friction selon l'une quelconque des revendications précédentes, dans lequel l'unité de palier (44) et/ou le corps de compression (100) est maintenu(e) d'une telle manière qu'elle/il peut être déplacé(e) autour d'un axe de pivotement (114) de manière perpendiculaire par rapport à la surface de friction (56), dans lequel en particulier l'axe de pivotement (114) correspond à un axe de pivotement (24) sur lequel un élément de support (22) est articulé, d'une manière pivotante, sur un cadre (12).

Fig. 1

Fig. 2

Fig.3

# Fig.4

Fig.5

Fig.6

Fig.7

**Fig. 8**

Fig.9

Fig. 10

Fig. 11

Fig. 12

**Fig. 13**

Fig. 14

Fig.15

Fig.16

Fig. 17

Fig. 18

Fig. 19

Fig. 20

Fig. 21

Fig.22

Fig. 23

**IN DER BESCHREIBUNG AUFGEFÜHRTE DOKUMENTE**

**In der Beschreibung aufgeführte Patentdokumente**

- JP 11227916 A